(19) **Europäisches Patentamt European Patent Office Office européen des brevets**

(11) **EP 3 252 615 B1**

(12) **FASCICULE DE BREVET EUROPEEN**

(45) Date de publication et mention de la délivrance du brevet:
**08.09.2021 Bulletin 2021/36**

(51) Int Cl.:
**G06F 17/10** (2006.01)     **G05D 1/00** (2006.01)
**G06T 15/00** (2011.01)

(21) Numéro de dépôt: **17174279.4**

(22) Date de dépôt: **02.06.2017**

(54) **PROCEDE ET SYSTEME DE DETERMINATION DE CELLULES TRAVERSEES PAR UN AXE DE MESURE OU DE VISUALISATION**

**VERFAHREN UND SYSTEM ZUR BESTIMMUNG VON ZELLEN, DIE VON EINER MESS- ODER VISUALISIERUNGSACHSE DURCHZOGEN SIND**

**METHOD AND SYSTEM FOR DETERMINING CELLS CROSSED BY A MEASURING OR VIEWING AXIS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2016 FR 1655104**

(43) Date de publication de la demande:
**06.12.2017 Bulletin 2017/49**

(73) Titulaire: **Commissariat à l'Energie Atomique et aux Energies Alternatives 75015 Paris (FR)**

(72) Inventeurs:
- **MOTTIN, Julien 38330 SAINT-ISMIER (FR)**
- **RAKOTOVAO ANDRIAMAHEFA, Tiana 38100 GRENOBLE (FR)**
- **PUSCHINI PASCUAL, Diego 38240 MEYLAN (FR)**
- **DEBICKI, Olivier 38660 SAINT-VINCENT-DE-MERCUZE (FR)**

(74) Mandataire: **Marks & Clerk France Immeuble "Visium" 22, avenue Aristide Briand 94117 Arcueil Cedex (FR)**

(56) Documents cités:
- **GUTMANN J-S ET AL: "A Floor and Obstacle Height Map for 3D Navigation of a Humanoid Robot", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 avril 2005 (2005-04-18), pages 1066-1071, XP010872097, DOI: 10.1109/ROBOT.2005.1570257 ISBN: 978-0-7803-8914-4**
- **Mel Slater: "Tracing a ray through uniformly subdivided n- dimensional space", The Visual Computer, 1 janvier 1992 (1992-01-01), XP055346587, Extrait de l'Internet: URL:http://rd.springer.com/content/pdf/10. 1007/BF01901027.pdf [extrait le 2017-02-16]**
- **Y K Liu ET AL: "A General Multi-step Algorithm for Voxel Traversing Along a Line", COMPUTER GRAPHICS forum Volume, 31 octobre 2007 (2007-10-31), pages 73-80, XP055346809, DOI: 10.1111/j.1467-8659.2007.001097.x Extrait de l'Internet: URL:http://onlinelibrary.wiley.com/store/1 0.1111/j.1467-8659.2007.01097.x/asset/j.14 67-8659.2007.01097.x.pdf?v=1&t=iz8h0o8x&s= fddec98ff67e7d4ff2199309c76082b9e1e58362 [extrait le 2017-02-16]**
- **Y. K. LIU ET AL: "An Integer One-Pass Algorithm for Voxel Traversal", COMPUTER GRAPHICS FORUM, vol. 23, no. 2, 1 juin 2004 (2004-06-01), pages 167-172, XP055346815, GB ISSN: 0167-7055, DOI: 10.1111/j.1467-8659.2004.00750.x**

- CLEARY J G ET AL: "Analysis of an algorithm for fast ray tracing using uniform space subdivision", VISUAL COMPUTER, SPRINGER, BERLIN, DE, vol. 4, no. 2, 1 janvier 1988 (1988-01-01) , pages 65-83, XP008121704, ISSN: 0178-2789
- TIANA RAKOTOVAO ET AL: "Integration of multi-sensor occupancy grids into automotive ECUs", PROCEEDINGS OF THE 53RD ANNUAL DESIGN AUTOMATION CONFERENCE ON, DAC '16, ACM PRESS, NEW YORK, NEW YORK, USA, 5 juin 2016 (2016-06-05), pages 1-6, XP058259044, DOI: 10.1145/2897937.2898035 ISBN: 978-1-4503-4236-0 & Anonymous: "Conference Paper: Integration of multi-sensor occupancy grids into automotive ECUs", Julien Mottin - Publications, 7 février 2017 (2017-02-07), XP055343258, ResearchGate Extrait de l'Internet: URL:https://www.researchgate.net/profile/Julien_Mottin/publications [extrait le 2017-02-07]

**Description**

L'invention concerne un procédé et un système de détermination de cellules situées sur un axe ou un trajet entre un premier point source et un deuxième point.

L'invention s'applique dans des systèmes électroniques de perception pour l'aide à la navigation. Ce type de dispositifs est utilisé dans le domaine de l'automobile, de la robotique, du drone, dans les chaînes de production automatisées, etc., dans le but notamment de détecter et de déterminer la position d'un corps matériel susceptible de se trouver sur la trajectoire d'un dispositif en mouvement.

On entend par « corps matériel », toute substance ou objet matériel présentant une individualité et pouvant être détecté et identifié par un capteur approprié. Ainsi, sont considérés comme des corps matériels les objets inanimés, qu'ils soient naturels ou artificiels, les végétaux, les animaux, les êtres humains, mais aussi des particules liquides ou solides en suspension dans l'air, comme les nuages, voire des masses liquides ou gazeuses.

L'invention peut aussi être utilisée dans le domaine de reconstruction d'images, afin de déterminer les informations à utiliser pour reconstruire une image dans une direction de vision donnée, par exemple selon un axe d'observation ou de vision d'un capteur.

Dans le domaine de la perception d'objets, il existe deux principales familles de technique de perception : les méthodes géométriques, qui visent à identifier la géométrie des objets de l'espace environnant, et celles à base de grille d'occupation, qui visent à déterminer si un certain emplacement est occupé par un obstacle, plus généralement par un corps matériel. L'invention relève des techniques à base de grille d'occupation.

Pour capturer et interpréter l'environnement, le système de perception emploie des capteurs de distance qui renseignent sur l'éloignement des obstacles alentours. Ces capteurs de distance peuvent classiquement être : des radars, des capteurs ultrasonores, des imageurs 3D, des systèmes de stéréovision, des LIDARs (Light Détection And Ranging), etc. Pour améliorer la robustesse de la fonction de perception et pour accroître le champ de vision global, le système intègre plusieurs capteurs hétérogènes. Une des difficultés est de déterminer, avec précision et dans un temps de calcul raisonnable, les cellules susceptibles d'être traversées ou observées par un dispositif en déplacement afin de leur associer une information relative à la présence ou à l'absence d'un obstacle. Les contraintes rencontrées sont principalement de deux ordres, le besoin en calcul et le besoin en mémoire.

Une grille d'occupation est une partition de l'espace observé en cellules. Pour chaque cellule, on cherche son état. Par exemple, deux issues peuvent être possibles, « occupée » ou « vide ». Le niveau de certitude sur l'occupation d'une cellule est alors donné, par exemple, avec la probabilité de l'événement « O =occupée » noté P(O) et avec le complémentaire P(e)=1-P(O). Dans d'autres applications, on pourra associer à une cellule une valeur ou un paramètre encodant la connaissance d'une autre grandeur spatiale, comme la pollution de l'air, ou la température d'une zone. Les probabilités d'occupation sont, par exemple, estimées à partir de la connaissance de l'environnement extérieur fournie par les capteurs.

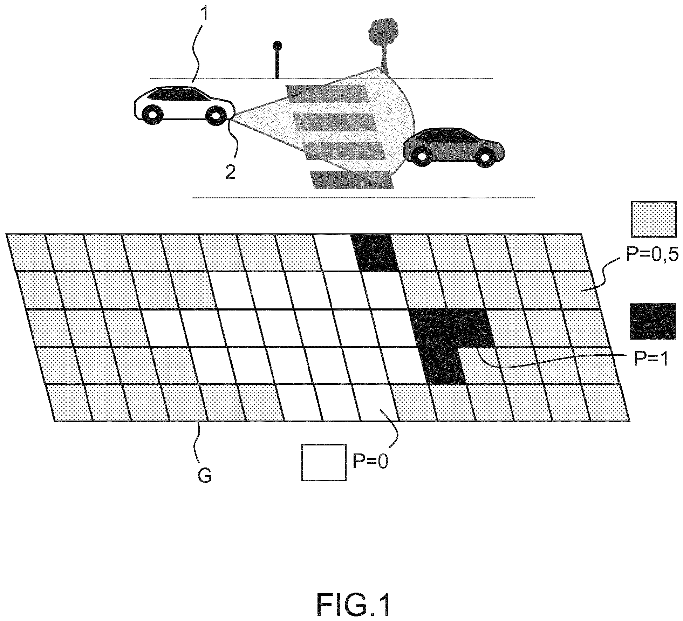

L'exemple donné en figure 1, représente la mise en œuvre du framework des grilles d'occupation pour un véhicule 1 équipé d'un capteur de distance 2 à l'aide d'une grille régulière G. Chaque cellule de cette grille représente un fragment de l'espace situé devant le véhicule, et pour chaque cellule la probabilité d'occupation est calculée. Une valeur supérieure à 0,5 indique une certitude plus élevée que la cellule en question soit occupée. Inversement, une valeur inférieure à 0,5 indique que la cellule a plus de chance d'être libre. La probabilité égale à 0,5 indique qu'aucune information pertinente n'est disponible pour se prononcer sur l'état de la cellule.

En fonction des applications, il peut être critique de déterminer les cellules occupées (analyse de trajectoire des obstacles, suivi de cible, etc.) ou les cellules vides (planification de déplacement, évitement, etc.). L'avantage du framework des grilles d'occupation est qu'avec une unique modélisation de l'environnement plutôt simple on représente les deux types d'informations.

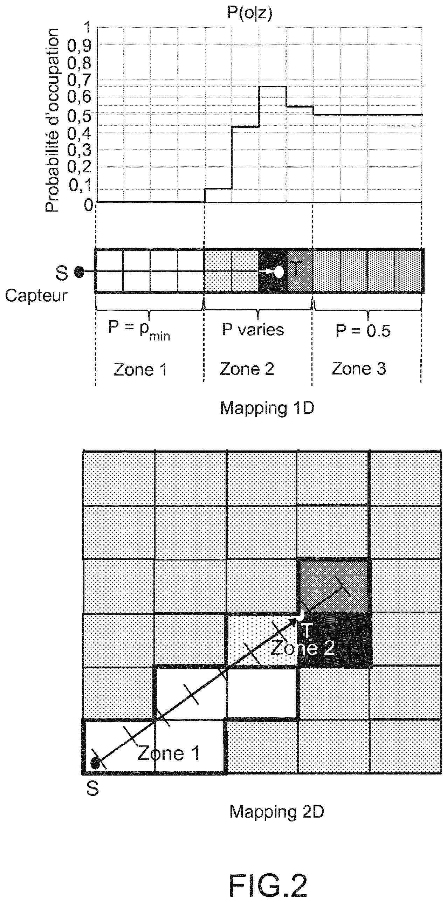

Sur la figure 2, un modèle de capteur 1D est utilisé pour l'évaluation de l'occupation d'une cellule. Ce modèle de capteur connu de l'homme du métier permet l'évaluation de l'occupation dans une grille 1D représentée sur la gauche de la figure 2. Les informations d'occupation 1D sont ensuite mappées dans un modèle 2D, partie droite de la figure 2. Cela nécessite en premier lieu de positionner le capteur S dans la grille, puis la cible F et de déterminer toutes les cellules traversées par la demi-droite [SF] dans la grille. Lorsque plusieurs capteurs sont utilisés, pour chacune des cellules l'information est alors fusionnée avec celle des autres capteurs ayant une information pertinente pour la cellule en question. En 1D ou en 2D, les cellules dont l'information d'occupation (probabilité d'occupation, par exemple) est à mettre à jour se situent entre S et F et aussi au-delà de F, ceci du fait de l'incertitude liée à la précision de mesure du capteur.

Un des problèmes pour le calcul de grilles d'occupation 2D ou 3D, lorsque l'on utilise plusieurs capteurs hétérogènes positionnés en différents emplacements de l'espace étudié, est que le besoin en calcul explose. En effet, pour chaque mesure le profil d'occupation 1D correspondant à une cellule est calculé, puis ce profil 1D est mappé et fusionné dans une grille de dimension plus grande. Les grandeurs manipulées sont en général des probabilités et des distances, traditionnellement exprimées à l'aide de nombre réels. Ces nombres réels sont la plupart du temps représentés à l'aide de nombres flottants qui imposent au système numérique d'être capable de supporter des opérations arithmétiques flottantes. Par ailleurs, et indépendamment de toute représentation numérique, le problème de mapping est intrinsèquement délicat car il met en œuvre du calcul exploitant de l'information à différentes résolutions spatiales. En effet, la position des capteurs et leurs réponses sont, la plupart du temps, connues à des résolutions spatiales supérieures à celle de la grille. La représentation des distances à l'aide de nombres flottants est alors souvent utilisée, car elle permet de s'abstraire dans le calcul de considération sur la précision des informations spatiales.

Différentes méthodes sont connues de l'art antérieur pour la détermination de cellules occupées dans des grilles et aussi pour la manière d'obtenir l'information renseignant une cellule.

Le document intitulé « A Fast Voxel Traversai Algorithm for Ray Tracing" de A. W. John Amanatides, Eurographics, 1987, divulgue un algorithme de tracé de ligne dans un environnement 2D ou 3D. Cet algorithme consiste à évoluer sur l'équation paramétrique de droite 2D ou 3D et à collecter l'ensemble des cellules traversées. Cet algorithme requiert néanmoins une opération flottante à chaque itération (passage à la cellule suivante).

Le document de A. Hornung, K. M. Wurm, M. Bennewitz, C. Stachniss, and W. Burgard intitulé "OctoMap: an efficient probabilistic 3D mapping framework based on octrees" publié dans Autonomous Robots, 2013, décrit une méthode pour représenter des grilles d'occupation tridimensionnelles. Le framework général permet l'intégration continue d'information de capteurs et décrit comment les informations sensorielles sont mappées dans l'environnement. La méthode exploite alors les travaux d'Amanatides précités pour le mapping de l'information d'environnement.

L'algorithme décrit dans le document de J.E. Bresenham intitulé « Algorithm for computer control of a digital plotter », IBM Systems Journal, 1965, permet de tracer une ligne sur un écran. L'objectif de l'algorithme est d'être ultra performant, et de donner un résultat satisfaisant à l'œil. D'un point de vue mathématique, le principe consiste à déterminer tous les pixels (~cellules) traversés par une ligne (~mesure capteur). Cet algorithme ne nécessite que des opérations entières sans multiplication ni division. En revanche, certains pixels traversés par la ligne ne seront pas affichés, et certains pixels affichés ne sont pas mathématiquement traversés par la ligne.

La demande de brevet FR1558919 du demandeur décrit une méthode permettant de réaliser la fusion de l'information d'occupation au niveau d'une cellule. Cette technique permet de construire le résultat de la fusion au moyen d'opérations arithmétiques uniquement. En revanche, la méthode ne décrit pas comment résoudre le problème du mapping de l'information 2D ou 3D en arithmétique entière.

Dans la demande de brevet WO2013189482, une représentation des grilles d'occupation à l'aide de quadtree est proposée. L'usage des quadtree pour les grilles d'occupation 2D pour les applications automobiles est motivée pour principalement deux raisons :

- Les capteurs ne travaillent pas forcément aux mêmes résolutions, et il peut être judicieux d'avoir une structure de données hiérarchique qui permette un traitement de l'information multi-résolution,
- Les applications n'exploitent pas nécessairement l'information à la même résolution (freinage urgence, vs navigation par exemple).

La difficulté technique résolue par cette méthode permet de construire une information de plus basse résolution à partir d'une information de plus faible résolution. Elle ne décrit pas comment le mapping de l'information est réalisé à quelque résolution que ce soit.

Le document de Mel Slater intitulé « Tracing a ray through uniformly subdivided n-dimensional space », The Visual Computer, 1 janvier 1992, XP055346587 concerne un procédé utilisant des calculs en flottant pour déterminer des cellules coupées par une droite dont l'équation est exprimée par une droite paramétrique.

Le document de Gutmann J-S et al, décrit une méthode pour la navigation en trois dimensions d'un robot humanoïde qui s'appuie sur des calculs de probabilité pour construire une image de l'environnement et des obstacles présents sur un parcours du robot.

Il est donc important de disposer d'une méthode permettant de déterminer, simplement et avec un nombre faible de ressources de calcul, les coordonnées des cellules dont on souhaite mettre à jour la valeur de probabilité d'occupation ou une valeur représentative du contenu de la cellule traversée.

Dans la suite de la description, l'expression « cellule traversée » désigne une cellule qui est traversée ou observée par le champ de vision d'un capteur ou d'un observateur.

Une fonction d'erreur Err() est définie comme une fonction qui permet de calculer une valeur d'erreur représentative de la position d'au moins une coordonnée d'un point appartenant à une grille d'occupation par rapport à un trajet défini dans un espace d'observation. Des exemples seront donnés par la suite.

A cet effet, l'invention vise à fournir une méthode de détermination des cellules nécessitant moins de ressources que les méthodes proposées dans l'art antérieur. L'invention permet aussi d'optimiser la phase de mapping de l'information de l'occupation dans une grille, quelque que soit sa dimension, 1D, 2D, 3D, etc., pour la rendre beaucoup moins contraignante pour l'architecture de calcul, plus rapide tout en assurant une précision par rapport aux approches flottantes traditionnelles.

L'invention concerne un procédé de perception de corps matériels destiné à détecter et déterminer la position desdits corps sur une grille d'occupation G à au moins 2 dimensions, ayant un premier pas de résolution $R_G$, et comprenant un ensemble de cellules représentées par des sommets (couramment appelés vertex en anglais) et des segments reliant ces sommets, chaque cellule de la grille d'occupation G ayant une probabilité d'occupation par un corps matériel, le procédé utilisant un capteur de détection d'obstacles positionné en point source S et comprenant les étapes suivantes :

a- Acquisition par ledit capteur d'une mesure de la position d'un corps matériel détecté en un point F ;

b- Définition des coordonnées des points S et F dans un espace discrétisé à l'aide d'un pas spatial $\delta$, le pas spatial $\delta$ étant inférieur au pas de résolution $R_G$ de la grille G, la taille des cellules étant définie par $taille(c) = r \cdot \delta$, $r \in \mathbb{N}$, un point M de coordonnées (l,m) dans cet espace discrétisé se situant dans l'espace continu au point (x,y), où

$$x \quad = \quad l \cdot \delta$$

$$y \quad = \quad m \cdot \delta$$

c- les points S et F ayant respectivement des coordonnées $(l_S, m_S)$ et $(l_F, m_F)$; détermination de la cellule $c_s$ de la grille d'occupation G contenant le point S ;

d- Détermination des coordonnées, dans l'espace discrétisé, d'un sommet initial V0 de la cellule $c_s$ ;

e- Calcul de la valeur d'un paramètre d'erreur E, entier, en utilisant une fonction d'erreur $Err_d(M)$ permettant d'évaluer, dans l'espace discrétisé, un écart entre un point de l'espace et une droite reliant les points S et F, ledit paramètre d'erreur E étant initialisé à la valeur prise par ladite fonction d'erreur pour ledit sommet initial V0 de la cellule $c_s$,

f- Calcul de la valeur dudit paramètre d'erreur E pour au moins un premier sommet $V1_i$ de la cellule courante $c_i$ de la grille en cours d'observation, correspondant à $Err_d(V1_i)$, ce calcul consistant à réaliser une opération d'addition ou de soustraction entre nombres entiers, entre d'une part ladite valeur du paramètre E obtenue pour le sommet initial $V0_i$ de la cellule courante $c_i$, et correspondant à $Err_d(V0_i)$, et d'autre part une valeur d'incrément entière ($\Delta$) prédéfinie en fonction des coordonnées des points S et F dans l'espace discrétisé,

g- Etudier la valeur du paramètre d'erreur E précédemment calculée par rapport à une valeur de référence pour déterminer une cellule suivante $c_{i+1}$ traversée par le trajet [SF] ;

h- Calculer, si nécessaire, la valeur dudit paramètre d'erreur E pour un sommet initial $V0_{i+1}$ de la cellule suivante $c_{i+1}$, correspondant à $Err_d(V0_{i+1})$, ce calcul consistant à réaliser une opération d'addition ou de soustraction entre nombres entiers, entre d'une part ladite valeur du paramètre E obtenue pour au moins un sommet $V_i$ de la cellule courante $c_i$, et correspondant à $Err_d(V_i)$, et d'autre part une valeur d'incrément entière ($\Delta$) prédéfinie en fonction des coordonnées des points S et F dans l'espace discrétisé,

i- Utiliser cette cellule suivante $c_{i+1}$ et ladite valeur du paramètre d'erreur E obtenue pour ledit sommet initial $V0_{i+1}$ de cette cellule comme point de départ et réitérer les étapes f à h jusqu'à atteindre au moins la cellule $C_F$ contenant le point final F,

j- Déterminer la liste $\{c_i\}$ des cellules considérées dans les étapes précédentes et situées sur le trajet [SF] ou situées à une distance prédéfinie du trajet [SF] et mettre à jour la valeur de probabilité d'occupation de chacune des cellules listées dans la grille d'occupation G.

Le corps matériel ou l'objet peut être un obstacle se trouvant sur le trajet, les cellules sont alors renseignées par une valeur de probabilité d'occupation. L'objet peut être une image que l'on souhaite reconstituer et la cellule sera renseignée par un paramètre représentatif de l'image dans le champ de vision du capteur.

Selon une variante de réalisation du procédé susmentionné, au cours de l'étape f, on calcule, pour chaque sommet V « supplémentaire » de la cellule courante $c_i$, autre que le sommet initial, une valeur dudit paramètre d'erreur E, correspondant à $Err_d(V)$, ce calcul consistant à réaliser une opération d'addition ou de soustraction entre nombres entiers, entre d'une part ladite valeur du paramètre E obtenue pour le sommet initial $V0_i$ de la cellule courante $c_i$, et correspondant à $Err_d(V0_i)$, et d'autre part une valeur d'incrément entière ($\Delta$) prédéfinie en fonction des coordonnées des points S et F dans l'espace discrétisé, et, au cours de l'étape g, on effectue les étapes suivantes :

- on recherche si une des valeurs dudit paramètre d'erreur E obtenues pour les sommets supplémentaires est nulle pour un sommet identifié et, dans l'affirmatif, ce sommet est par suite considéré comme le sommet initial de la cellule suivante $c_{i+1}$, le paramètre d'erreur E correspondant à ce nouveau sommet initial étant égal à celui préalablement calculé pour ledit sommet identifié ;
et dans la négative,
- on recherche un côté, ou une face, de la cellule courante ci définie par des sommets supplémentaires associés à des valeurs du paramètre E de signes opposés, ladite cellule suivante $c_{i+1}$ étant alors la cellule adjacente à la cellule courante $c_i$ partageant le même côté, un des sommets supplémentaires appartenant à ce côté commun étant alors considéré comme le sommet initial de la cellule suivante $c_{i+1}$, le paramètre d'erreur E correspondant à ce nouveau sommet initial étant égal à celui préalablement calculé pour ce dit sommet ;

et dans lequel la liste $\{c_j\}$ des cellules définies à l'étape j correspond aux cellules traversées par le segment de droite entre les points S et F.

Selon une variante de réalisation du procédé susmentionné, la grille d'occupation est définie en 2 dimensions et la fonction d'erreur $Err_d(M)$ est définie par :

$$Err_d(M) = (m - m_s) \cdot (l_F - l_s) - (l - l_s) \cdot (m_F - m_s).$$

et dans lequel, au cours de l'étape f, on calcule une valeur du paramètre d'erreur, pour chaque sommet V « supplémentaire » de la cellule courante ci, autre que le sommet initial V0, et désignés $V_l$, $V_m$ et $V_{lm}$, $V_{lm}$ étant le sommet opposé au sommet initial, selon les opérations suivantes :

$$Err_d(V_l) \quad = \quad Err_d(V) - \Delta m$$

$$Err_d(V_m) \quad = \quad Err_d(V) + \Delta l$$

$$Err_d(V_{lm}) \quad = \quad Err_d(V_l) + \Delta l$$

Où $\Delta l = r \cdot (l_F - l_s)$ et $\Delta m = r \cdot (m_F - m_s)$

Selon une variante de réalisation du procédé susmentionné, lors de l'étape g, en comparant le signe des erreurs calculées on détermine la prochaine cellule traversée, de la manière suivante:

o Si $Err_d(V_{lm})=0$, alors la cellule ci+1 correspond à la cellule ayant un sommet initial correspondant à $V_{lm}$ et le paramètre d'erreur E associé à ce nouveau sommet initial est égal à $Err_d(V_{lm})$,

o Si $Err_d(V_{lm})$ et $Err_d(V_l)$ sont de signes opposés, alors la cellule ci+1 correspond à la cellule ayant un sommet initial correspondant à $V_l$ et le paramètre d'erreur E associé à ce nouveau sommet initial est égal à $Err_d(V_l)$,

o Sinon la cellule $c_{i+1}$ correspond à la cellule ayant un sommet initial correspondant à $V_{lm}$ et le paramètre d'erreur E associé à ce nouveau sommet initial est égal à $Err_d(V_m)$.

Selon une variante de réalisation du procédé susmentionné, la grille d'occupation est définie en 3 dimensions et la fonction d'erreur $Err_d(M)$ est définie pour un point M(l, m, n) en coordonnées entières de la façon suivante :

$$Err_{d\_xy}(M) \quad = \quad (m - m_s) \cdot (l_t - l_s) - (l - l_s) \cdot (m_t - m_s)$$

$$Err_{d\_yz}(M) \quad = \quad (n - n_s) \cdot (m_t - m_s) - (m - m_s) \cdot (n_t - n_s)$$

$$Err_{d\_xz}(M) \quad = \quad (l - l_s) \cdot (n_t - n_s) - (n - n_s) \cdot (l_t - l_s)$$

et, au cours de l'étape f, on calcule une valeur du paramètre d'erreur, pour chaque sommet V « supplémentaire » de la cellule courante ci, autre que le sommet initial V0, et désignés $V_l$, $V_m$, $V_n$, $V_{lm}$, $V_{ln}$, $V_{mn}$, $V_{lmn}$, $V_{lmn}$ étant le sommet d'une cellule tridimensionnelle opposé au sommet initial, selon les opérations suivantes :

$$Err_{d\_xy}(V_l) \quad = \quad Err_{d\_xy}(V) - \Delta m$$

$$Err_{d\_xy}(V_m) \quad = \quad Err_{d\_xy}(V) + \Delta l$$

$$Err_{d\_xy}(V_{lm}) \quad = \quad Err_{d\_xy}(V_l) + \Delta l$$

$$Err_{d\_yz}(V_m) \quad = \quad Err_{d\_yz}(V) - \Delta n$$

$$Err_{d\_yz}(V_n) \quad = \quad Err_{d\_yz}(V) + \Delta m$$

$$Err_{d\_yz}(V_{mn}) \quad = \quad Err_{d\_yz}(V_m) + \Delta m$$

$$Err_{d\_xz}(V_n) \quad = \quad Err_{d\_xz}(V) - \Delta l$$

$$Err_{d\_xz}(V_l) \quad = \quad Err_{d\_xz}(V) + \Delta n$$

$$Err_{d\_xz}(V_{ln}) \quad = \quad Err_{d\_xz}(V_n) + \Delta n$$

Où $\Delta l = r \cdot (l_t - l_s)$, $\Delta m = r \cdot (m_t - m_s)$ et $\Delta n = r \cdot (n_t - n_s)$

Selon une variante de réalisation du procédé susmentionné, au cours de l'étape j, les cellules listées correspondent aux cellules pour lesquelles un de leurs sommets est associé avec une valeur de paramètre d'erreur comprise entre une valeur d'erreur minimale ($e_{min}$) et une valeur d'erreur maximale ($e_{max}$) prédéfinies..

Selon une variante de réalisation du procédé susmentionné, les valeurs d'erreur minimale et maximale sont fonction, pour une cellule donnée, de la distance entre le sommet initial de cette cellule et ledit sommet S.

Selon une variante de réalisation du procédé susmentionné, les coordonnées d'un point M dans l'espace discrétisé sont représentées, sur chaque axe d'un repère, par un entier défini par un mot binaire de W bits, et dans lequel un point M appartient à une cellule de la grille d'occupation, chaque cellule étant définie, pour chaque axe du repère par un indice entier défini par un mot binaire de d bits, et dans lequel W est supérieur à d et dans lequel W et d sont choisis de sorte que

$$d < W \leq \frac{T + d - 1}{2}$$

avec T correspondant au nombre de bits maximal pouvant être manipulés par une unité arithmétique entière utilisée pour la mise en œuvre d'une opération de multiplication pour réaliser ledit calcul (404) de la valeur d'un paramètre d'erreur E, à l'étape e.

Selon une variante de réalisation du procédé susmentionné, les coordonnées d'un point M dans l'espace discrétisé sont représentées, sur chaque axe d'un repère, par un entier défini par un mot binaire de W bits, et on détermine les coordonnées entières ($u_x$, $u_y$, $u_z$) d'un point M à partir de coordonnées sphériques en calculant l'écart au centre du repère K

$$u_x - u_x^K \quad = \quad D \cdot T_x(\alpha, \omega)$$

$$u_y - u_y^K \quad = \quad D \cdot T_y(\alpha, \omega)$$

$$u_z - u_z^K \quad = \quad D \cdot T_z(\omega)$$

avec D la distance de la cible, $\alpha$ la longitude mesurée à partir de l'axe x, $\omega$ la latitude mesurée depuis le plan équatorial, et $T_x(\alpha, \omega)$, $T_y(\alpha, \omega)$ et $T_z(\omega)$ sont des tables précalculées de valeurs entières (105) mémorisées définies par :

$$T_x(\alpha, \omega) \quad = \quad \frac{2^{W-1} \cdot \cos(\omega) \cdot \cos(\alpha)}{R}$$

$$T_y(\alpha, \omega) \quad = \quad \frac{2^{W-1} \cdot \cos(\omega) \cdot \sin(\alpha)}{R}$$

$$T_z(\omega) \quad = \quad \frac{2^{W-1} \cdot \sin(\omega)}{R}$$

R désigne la portée maximale du capteur,

$$u_x^K \quad = \quad 2^{W-1}$$

$$u_y^K \quad = \quad 2^{W-1}.$$

$$u_z^K \quad = \quad 2^{W-1}$$

Selon une variante de réalisation du procédé susmentionné, pour une grille de côté 2R, on filtre les informations de capteurs qui sont en dehors de la sphère de rayon R avant d'exécuter les étapes du procédé.

Selon une variante de réalisation du procédé susmentionné, on normalise les valeurs des tables précitées par une valeur $D_{max} = \sqrt{2} \cdot R$ en 2 dimensions et $D_{max} = \sqrt{3} \cdot R$ en 3 dimensions.

L'invention concerne aussi un dispositif pour déterminer les coordonnées de cellules $c_i$ susceptibles d'être traversées dans un espace d'observation représenté par une grille G ayant un premier pas de résolution, une cellule étant représentée par des sommets et des côtés ou segments reliant ces sommets, caractérisé en ce qu'il comporte au moins les éléments suivants :

- Un ou plusieurs capteurs adaptés à mesurer les coordonnées d'un point mesuré dans le pas de résolution de la grille situé à une distance de la cible F,
- Un module de discrétisation des coordonnées mesurées avec un pas de résolution spatial $\delta$ inférieur au pas $R_G$ de résolution de la grille,
- Un module de traitement des coordonnées discrétisées adaptées à exécuter les étapes du procédé selon l'une des revendications 1 à 11.

Selon une variante du dispositif susmentionné, l'espace d'observation est défini par un capteur embarqué sur un véhicule en déplacement et en ce qu'une cellule sélectionnée est renseignée par une valeur de probabilité d'occupation par un obstacle.

Selon une variante de réalisation, l'invention prévoit un procédé pour déterminer les coordonnées de cellules $c_i$ susceptibles d'être traversées dans un espace d'observation représenté par une grille G ayant un premier pas de résolution $R_G$, une cellule étant représentée par des sommets et des segments reliant ces sommets caractérisé en ce qu'il comporte au moins les étapes suivantes :

- Définir les coordonnées d'un point M en utilisant un espace discrétisé à l'aide d'un pas spatial $\delta$, le pas spatial $\delta$ étant inférieur au pas de résolution $R_G$ de la grille G, la taille des cellules étant définie par *taille*(*c*) = $r \cdot \delta$, $r \in \mathbb{N}$, le point M de coordonnées (l,m) dans cet espace discrétisé se situe dans l'espace continu au point (x,y), où

$$x \quad = \quad l \cdot \delta$$

$$y \quad = \quad m \cdot \delta'$$

- Initialiser une fonction d'erreur Err() représentative de la position d'au moins une coordonnée d'un sommet V de la cellule $c_s$ contenant le point source S par rapport à un trajet défini dans l'espace d'observation, le trajet reliant un point source S à un point final F,
- Calculer la valeur d'erreur $Err_d()$ obtenue pour au moins un premier sommet V de la cellule de la grille en cours d'observation,
- Etudier la valeur de l'erreur $Err_d(V)$ calculée par rapport à une valeur de référence et déterminer le côté traversé de la cellule observée par le trajet [SF] et la cellule suivante $c_{i+1}$ traversée,
- Utiliser cette cellule suivante $c_{i+1}$ et un premier sommet $V_{i+1}$ de cette cellule comme point de départ et réitérer les étapes jusqu'à atteindre au moins la cellule $C_F$ contenant le point final F,
- Etablir la liste $\{c_i\}$ des cellules traversées sur le trajet [SF] et utiliser les cellules pour caractériser un objet sur le trajet.

D'autres caractéristiques, détails et avantages de l'invention apparaîtront mieux à la lecture de la description donnée à titre illustratif et nullement limitatif et faite en référence aux figures qui représentent :

- Figure 1, une représentation du modèle d'environnement défini avec une grille d'occupation,
- Figure 2, une représentation du mapping d'occupation,
- Figure 3A, 3B, une illustration de la recherche de cellules traversées, et figure 3C, le cas de la méthode selon l'invention,
- Figure 3D, 3E , un exemple de recherche de cellules traversées dans un cône défini par un capteur,
- Figure 4, un exemple d'étapes du procédé selon l'invention,
- Figure 5, un calcul de la représentation entière,
- Figure 6, une représentation du domaine englobant,
- Figure 7A à 7F, un exemple de parcours d'arbre,
- Figure 8, une représentation des coordonnées entières en 3D et figure 9, le passage en coordonnées sphérique,
- Figures 10A, 10B, 10C, une représentation de grilles pour la taille de l'environnement, et
- Figure 11, un exemple de dispositif pour la mise en œuvre du procédé selon l'invention.

Afin de mieux faire comprendre l'objet de l'invention, l'exemple qui suit est donné à titre illustratif et nullement limitatif pour la détection d'obstacles dans le cas d'une voiture équipée d'une caméra permettant de détecter des obstacles pouvant être présents sur son trajet.

Les grilles d'occupation sont une discrétisation de l'espace observé en cellules. Le mapping d'information capteurs « mono-cible » nécessite de pouvoir rapidement trouver les cellules traversées par une droite.

Soit $S(x_s,y_s)$ la position du capteur situé sur la voiture, et $F(x_F,y_F)$ la cible détectée par le capteur. Les cellules traversées par le segment [SF] doivent subir une mise à jour de l'occupation. Le point M(x,y) est sur la ligne contenant le segment [SF] si et seulement si :

$$Err(M) = (y - y_s) \cdot (x_F - x_S) - (x - x_s) \cdot (y_F - y_s) = 0$$

On peut ensuite remarquer que si deux points A et B sont situés de part et d'autre de la ligne, alors on obtient Err(A) et Err(B) avec des signes opposés. Cette propriété permet de déduire un algorithme itératif de recherche des cellules traversées comprenant les étapes suivantes:

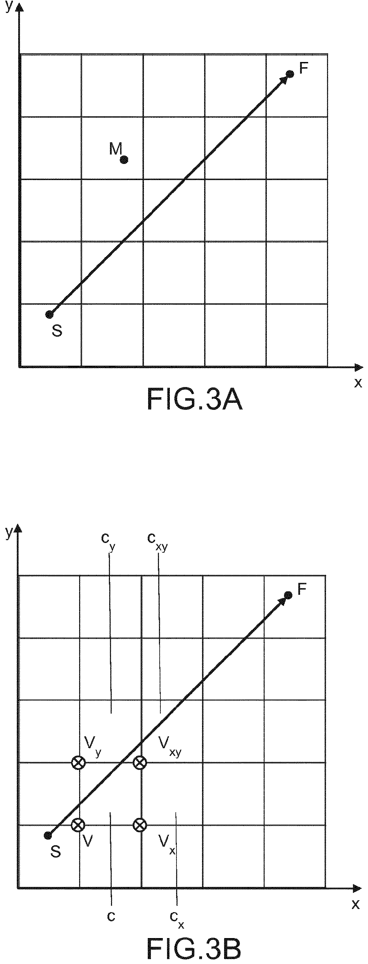

A1) On initialise pour cela l'algorithme de recherche à la cellule c=cs où $c_s$ est la cellule contenant le point S, comme sur la figure 3A. On suppose que l'on a parcouru un certain nombre de cellules, et qu'on se situe maintenant dans une cellule traversée c,

B1) On calcule alors les erreurs des sommets de $V_x$, $V_y$ et $V_{xy}$ de la cellule c, figure 3B :

Si $Err(V_{xy})$ =0, alors la prochaine cellule est $c_{xy}$,

Sinon, si $Err(V_x)$ et $Err(V_{xy})$ ont des signes opposés, alors la prochaine cellule traversée est $c_x$,

Sinon, la prochaine cellule traversée est $c_y$,

C1) On continue l'itération jusqu'à ce que la cellule c égale $c_F$ la cellule contenant le point F.

On peut remarquer que l'algorithme suppose $(x_F-x_s)>0$ et $(y_F-y_s)>0$. Les autres cas d'inflexion de droites (pentes négatives ou autres) peuvent se déduire facilement de ce premier cas.

La principale limitation de cet algorithme est qu'il requiert l'évaluation de la fonction d'erreur en trois points à chaque itération, cette fonction d'erreur nécessitant elle-même plusieurs opérations flottantes.

Pour pouvoir calculer les cellules traversées par une ligne dans une grille d'occupation sans recourir au calcul flottant, le procédé selon l'invention utilise une représentation entière (discrète) de l'espace. La principale difficulté réside dans le fait que la discrétisation de la grille elle-même n'est pas suffisante pour le calcul des intersections cellules/ligne. En effet, la position des capteurs peut être connue à une résolution plus importante que celle de la grille.

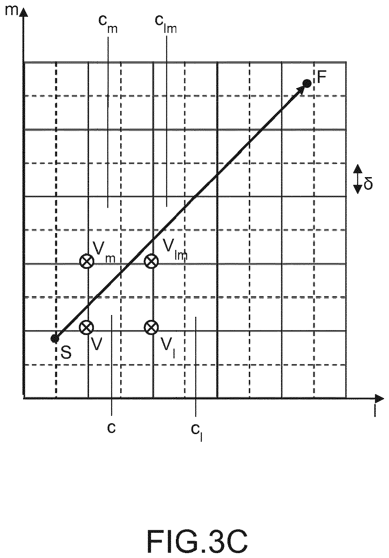

L'idée proposée dans cette invention consiste à exploiter, pour la recherche des cellules traversées, une discrétisation plus fine que celle de la grille pour garantir une précision équivalente à celle obtenue à l'aide de la méthode flottante présentée en figure 3C, tout en n'effectuant que des opérations arithmétiques entières simples et obtenir un gain en temps de calcul et diminuer les ressources nécessaires pour le calcul. On suppose pour cela que l'espace observé est discrétisé à l'aide d'un pas spatial δ constant, par exemple. Ce pas spatial est la plus petite dimension représentable dans cet espace discrétisé, et par conséquent les cellules de la grille d'occupation ont des côtés qui doivent être un multiple de δ. La taille d'une cellule est alors :

$$taille(c) = r \cdot \delta,$$

$r \in \mathbb{N}$ Un point de l'espace de coordonnées (l,m) dans cet espace discrétisé se situe dans l'espace continu au point (x,y), avec :

$$x = l \cdot \delta$$

$$y = m \cdot \delta^{\cdot}$$

Le point S est alors représenté par ses coordonnées $(l_s, m_s)$ et le point F par ses coordonnées $(l_F, m_F)$. Toutes les informations spatiales sont alors manipulées avec une précision égale à δ. Pour résoudre le problème présenté sur la figure 3C, on considère un point M(l, m). Le point M appartient à la droite contenant le segment [SF] si et seulement si :

$$Err_d(M) = (m - m_s) \cdot (l_F - l_s) - (l - l_s) \cdot (m_F - m_s) = 0 \qquad (1)$$

Si on note V, le sommet initial d'une cellule, $V_l$, $V_m$ et $V_{lm}$ les sommets d'une cellule comme présenté sur la figure 3C, il est possible d'écrire :

$$\begin{aligned} Err_d(V_l) &= Err_d(V) - \Delta m \\ Err_d(V_m) &= Err_d(V) + \Delta l \\ Err_d(V_{lm}) &= Err_d(V_l) + \Delta l \end{aligned} \qquad (2)$$

où $\Delta l = r \cdot (l_F - l_s)$ et $\Delta m = r \cdot (m_F - m_s)$. Ces quantités sont constantes et peuvent être calculées une fois pour toute la recherche sur la ligne SF.

De la définition de $Err_d(M)$ d'une part, et des équations permettant le calcul itératif des erreurs $Err_d(V_l)$, $Err_d(V_m)$ et $Err_d(V_{lm})$ d'autre part, on peut déduire un algorithme de calcul itératif pour la recherche des cellules traversées par la ligne ou droite [SF] :

A2) On commence par trouver la cellule $c_s$ contenant S, puis on initialise un paramètre d'erreur E, avec $E = Err_d(V)$ à l'aide de l'équation (1), V étant le coin inférieur gauche de la cellule courante dans l'exemple donné, soit la cellule $c_s$ dans la phase d'initialisation ;

B2) On calcule ensuite les erreurs des autres sommets de la cellule courante à l'aide des équations (2), connaissant $Err_d(V)$ précédemment calculé.

En comparant, par exemple, le signe des erreurs calculées on détermine la prochaine cellule traversée, future valeur c, et la future valeur E associée de manière analogue à l'algorithme de recherche de cellule précité :

Si $Err_d(V_{lm})=0$, alors $c = c_{lm}$ et $E = Err_d(V_{lm})$
Si $Err_d(V_{lm})$ et $Err_d(V_l)$ sont de signes opposés, alors $c = c_l$ et $E = Err_d(V_l)$
Sinon $c = c_m$ et $E = Err_d(V_m)$,

C2) On continue l'itération de l'étape B2 jusqu'à la dernière cellule contenant le point F.

On a supposé que $\Delta m$ et $\Delta l$ étaient positifs pour cet exemple. Sans sortir du cadre de l'invention, il serait possible d'appliquer ces étapes en les adaptant à des cas où la pente de la droite est négative ou d'autres cas. Ces autres cas se déduisent immédiatement de ce qui précède.

Il est aussi possible de considérer non plus le signe de l'erreur calculée, mais la valeur de l'erreur que l'on compare à une valeur de référence.

Ce nouvel algorithme de calcul des cellules traversées ne suppose qu'une seule évaluation de la fonction $Err_d(M)$, appliquée au sommet inférieur gauche V de la cellule contenant le point de départ, dans l'exemple donné. L'erreur des autres points testés est calculée uniquement de manière incrémentale à l'aide des équations (2). Cet algorithme met en œuvre deux multiplications et cinq additions signées pour l'initialisation, puis uniquement des additions signées à mesure que l'on parcourt les cellules. Toutes les opérations sont en arithmétique entière. La plateforme de calcul utilisée n'a besoin de ne fournir que des opérations arithmétiques réduite à : la multiplication entière, l'addition entière et la soustraction entière. Le procédé permet avantageusement de diminuer le temps de calcul et les ressources nécessaires.

A l'issue de ces étapes, le résultat du procédé se traduit sous la forme d'une liste de cellules $\{c_i\}$, de leurs coordonnées dans la grille G, qui vont être renseignées par une information de probabilité d'occupation, par exemple, ou encore par un paramètre encodant une grandeur spatiale.

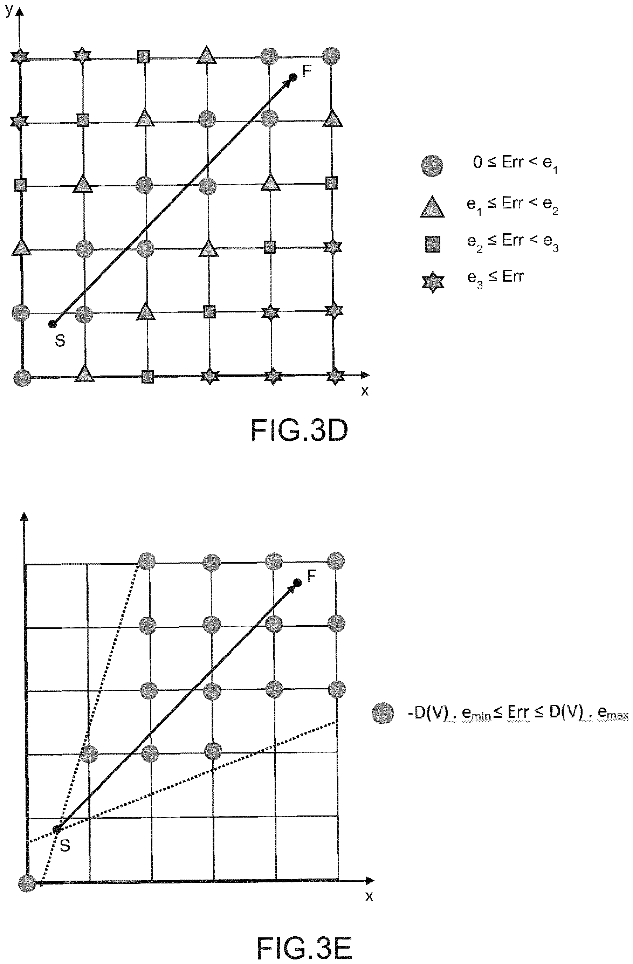

Les figures 3D et 3E illustrent un exemple de recherche de cellules en regardant non plus le signe de l'erreur calculée mais la valeur de l'erreur.

La figure 3D schématise la distribution d'une valeur d'erreur Err pour un ensemble de sommets de cellules, les valeurs d'erreur étant comprises entre un minimum $e_{min}$ et un maximum $e_{max}$. Les cellules représentées avec un rond sont sélectionnées pour la plage d'erreur $0 \leq Err < e_1$, les cellules associées au triangle pour la plage $e_1 \leq Err < e_2$, les cellules avec le carré pour la plage $e_2 \leq Err < e_3$ et les cellules étoile pour $e_3 \leq Err$. En réglant séparément les paramètres $e_{min}$ (négatif) et $e_{max}$ (positif), il est possible d'ajuster différemment le critère de sélection « au-dessus » de la droite SF ou « en-dessous » de la droite SF.

La figure 3E schématise le cas d'une erreur Err d'un sommet comprise entre une erreur minimale et une erreur maximale qui dépend de la distance du point à la source. En notant D(V) la distance entre le sommet V et le point S, il est possible de rechercher les cellules appartenant à un cône de détection défini par l'ouverture du capteur et centré sur le point S. On va rechercher les cellules dont l'erreur est comprise entre $D(V)^* e_{min}$ et $D(V)^* e_{max}$ où $e_{min}$ est une constante négative et $e_{max}$ une constante positive. Par exemple, les cellules sélectionnées sur la figure correspondant à l'intervalle $- D(V). e_{min} \leq err(V) \leq d(V). e_{max}$ sont représentées par des cercles.

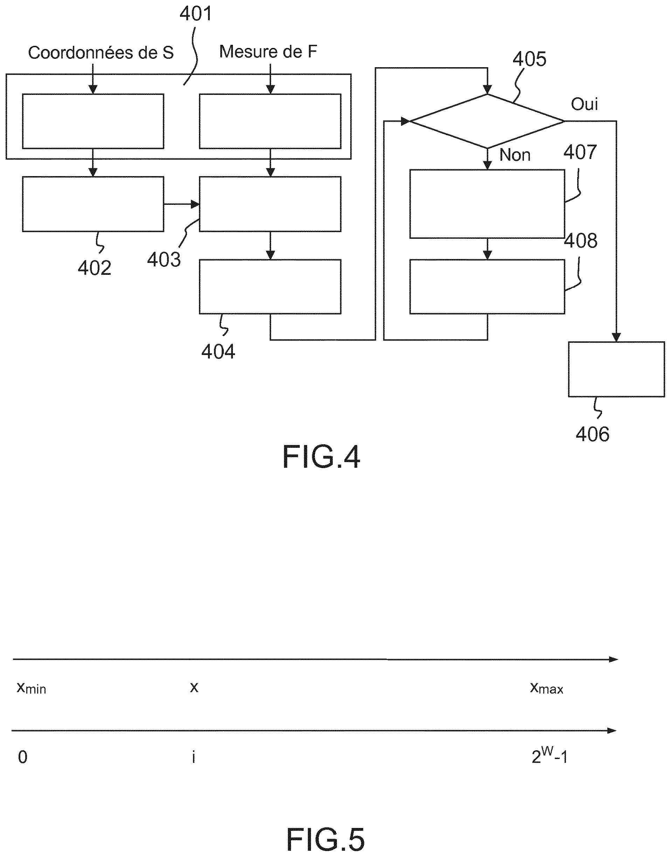

La figure 4 illustre une mise en œuvre des étapes du procédé selon l'invention, les coordonnées du capteur S $(S_x, S_y, S_z)$ et les coordonnées $(F_x, F_y, F_z)$ du point cible F avec la résolution de la grille en 3 dimensions x, y et z :

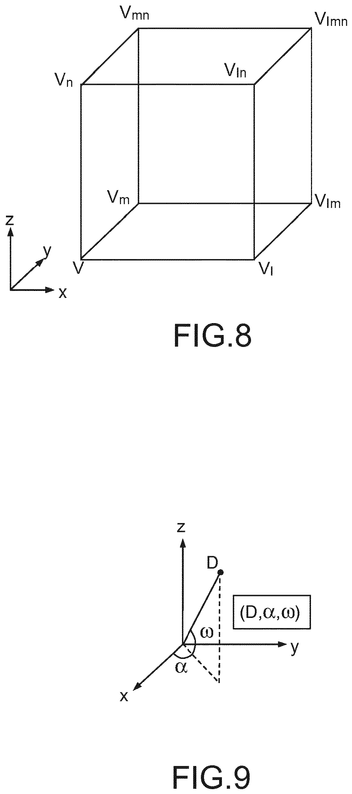

401 - la première étape consiste à calculer les coordonnées du capteur S en coordonnées de la sous-résolution $S_\delta(I_s, m_s, n_s)$, et en parallèle les coordonnées du point cible $F_\delta(I_F, m_F, n_F)$ avec la sous-résolution $\delta$ de la grille. On définit également $\Delta l$, $\Delta m$ et $\Delta n$ de façon similaire à la définition susmentionnée (en lien avec équation 2) et on définit également un moyen d'évaluation d'une erreur Err(M) pour un point M(l,m,n) par exemple en généralisant l'équation 1 susmentionnée ou par exemple selon les expressions développées infra, en relation avec la figure 8.

puis,

402 - on initialise la cellule $c_s$ contenant le capteur S,

403 - on détermine le sommet V de la cellule contenant le point S en analysant les signes de $\Delta l$, $\Delta m$ et $\Delta n$, par exemple,

404 - on initialise la ou les erreurs de mesure Err(), pour le premier sommet V de la grille G,

405 - on teste si la cellule scrutée, ou cellule courante, c contient la cible F,

Si oui alors on édite, 406, la liste des cellules $\{c_i\}$ trouvées par l'itération des étapes,

Si non, alors 407 on calcule les valeurs d'erreurs Err(V) des autres sommets de la cellule courante de la grille G en mettant en œuvre un procédé d'analyse similaire à celui de l'algorithme précité, notamment l'étape B2. Le calcul des valeurs d'erreur Err(V) peut par exemple être réalisé en généralisant l'équation 2 susmentionnées ou en utilisant les expressions données infra en relation avec la figure 8

408 - selon le signe des erreurs calculées on identifie la prochaine cellule à tester $c_{i+1}$ et son sommet $V_{i+1}$ point initial, puis on retourne à l'étape 405.

Les étapes s'appliquent aussi en utilisant non plus le signe des erreurs mais une valeur comme il a été décrit aux figures 3D et 3E. Les cellules retenues $\{c_i\}$ seront, par exemple, renseignées avec une valeur de probabilité d'occupation ou non selon une méthode décrite dans la demande de brevet du demandeur FR 1558919. Elles peuvent aussi comporter une valeur correspondant à une grandeur spatiale, etc.

Selon une variante de réalisation, le procédé va utiliser une représentation numérique afin d'optimiser le temps de calcul.

La représentation numérique d'un nombre entier est faite à l'aide de champ de bits pouvant avoir différentes largeurs. Les largeurs classiquement rencontrées sont 8, 16, 32 ou 64 bits. Des architectures spécifiques peuvent également avoir du support pour des entiers plus larges. Dans ce qui suit, on suppose la largeur des entiers connue et fixée. Sans perdre de généralité, et à titre d'exemple, on pose que cette largeur est W=32 bits, cette largeur d'entier étant supportée par la plupart des architectures de calcul et notamment par un grand nombre de plateformes microcontrôleur dépourvues de coprocesseur arithmétique flottante ou FPU (Floating Point Unit).

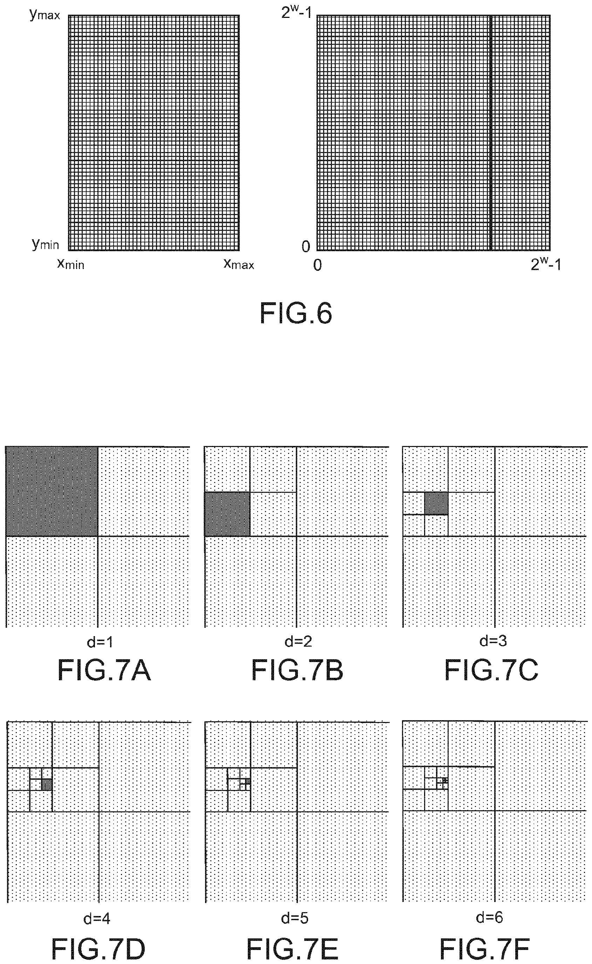

Les entiers représentables sur W bits sont les nombres entiers compris entre 0 et $2^W$-1. Pour W=32, ce sont les entiers compris entre 0 et 4294967295. Dans le procédé selon l'invention on cherche à représenter des distances et des positions à l'intérieur d'un domaine fixe, celui de la grille d'occupation. La taille du domaine d'étude est ainsi fixée par l'application. En trois dimensions, un tel domaine peut être défini à l'aide des coordonnées $(X_{min}, y_{min}, z_{min})$ et $(x_{max}, y_{max}, z_{max})$ des points extrêmes de la zone considérée. Le domaine d'étude est alors défini par : $[x_{min}, x_{max}] \times [y_{min} ; y_{max}] \times [z_{min} ; z_{max}]$. Les longueurs sur les trois axes, ainsi que les coordonnées de départ ne sont pas nécessairement les mêmes. Notons L la plus grande longueur du domaine : $L = \max(|x_{max} - x_{min}|\, |y_{max} - y_{min}|, |z_{max} - z_{min}|)$, figure 5. La représentation en arithmétique entière proposée permet d'utiliser les W bits pour représenter uniquement les positions comprises entre 0 et L. La valeur entière correspondante est déduite par simple translation puis par homothétie, figure 5. Dans le cas courant où les longueurs ne sont pas toutes de même taille, on utilise la représentation entière multi-résolution proposée sur un domaine carré ou cubique englobant le domaine physique étudié. Sur la figure 6, un exemple du procédé appliqué à un domaine 2D rectangulaire est illustré. Le point $(x_{min}, y_{min})$ devient le point de coordonnées entières (0,0). Par ailleurs le domaine $[x_{min}, y_{min}] \times [x_{max}, y_{max}]$ en coordonnées flottantes est inclus dans le domaine $[0,0] \times [2^W-1, 2^W-1]$ en coordonnées entières.

Pour représenter la position réelle x comprise entre $x_{min}$ et $x_{max}$ à l'aide d'un entier $u_x$ compris entre 0 et $2^W$-1, on forme l'équation suivante :

$$\frac{x - x_{min}}{x_{max} - x_{min}} \sim = \frac{u_x}{2^W}$$

Soit encore :

$$u_x = 2^W \cdot \frac{x - x_{min}}{x_{max} - x_{min}}$$

Où $u_x$ correspond à la partie entière
Réciproquement :

$$x = x_{min} + \frac{u_x \cdot (x_{min} - x_{max})}{2^W}.$$

Pour représenter la position réelle y et la position réelle z on utilise des principes similaires.

Dans la pratique, la conversion de coordonnées flottantes vers des coordonnées entières nécessite ainsi un certain nombre d'opérations arithmétiques flottantes qui peuvent être un obstacle pour la mise en œuvre pratique de la méthode sur des processeurs ne disposant pas de FPU.

Un premier avantage d'une telle représentation, est que les W bits utilisés pour représenter les positions dans une grille d'occupation sont tous exploités. Une représentation flottante de même largeur sera beaucoup moins précise dans l'intervalle considéré. A titre d'exemple, considérons que W=32 et que l'espace étudié est situé entre $x_{min}$ = -15m et $x_{max}$ = 15m et cherchons à représenter le point x = 2.17m. En nombre flottant simple précision les candidats sont :

Table 1

| Valeur binaire 32 bits en notation hexadécimale | Approximation réelle |
|---|---|
| 0x400AE147 | 2.169999838 |
| 0x400AE 148 | 2.170000076 |
| 0x400AE 149 | 2.170000315 |

En comparant avec la représentation 32 bits entière retenue par l'invention, les résultats obtenus sont :

Table 2

| Valeur entière 32 bits en notation décimale | Approximation réelle |
|---|---|
| 2458152949 | 2.169999999 |
| 2458152950 | 2.170000010 |
| 2458152951 | 2.170000017 |

Comme on le voit sur les tables 1 et 2, la précision numérique de l'approche est bien supérieure à l'approche flottante, tout en ne consommant pas plus de bits pour la représentation des nombres.

Les grilles d'occupation sont une discrétisation de l'espace observé en cellules. Dans un premier temps, on suppose que cette discrétisation est uniforme et cartésienne. Pour venir mettre à jour la probabilité d'occupation d'une cellule, on doit pouvoir rapidement trouver la cellule qui contient une position particulière (x,y,z). On suppose que les cellules sont indexées par des indices entiers indépendants dans chaque dimension : trouver la cellule qui contient la position (x,y,z) revient à trouver le triplet (i,j,k) d'entiers qui désigne la cellule recherchée.

On suppose que l'on a $N_x$ cellules sur l'axe x, $N_y$ sur l'axe y et $N_z$ sur l'axe z. Les coordonnées (i,j,k) recherchées sont alors typiquement déterminées par les équations :

$$i = \frac{(x - x_{min}) \cdot N_x}{x_{max} - x_{min}}$$

$$j = \frac{(y - y_{min}) \cdot N_y}{y_{max} - y_{min}}$$

$$k = \frac{(z - z_{min}) \cdot N_z}{z_{max} - z_{min}}$$

où les indices calculés sont les parties entières des fractions ci-dessus.

Dans ces formules, les ratios peuvent être pré-calculés à partir des éléments constants qui définissent la grille d'occupation (taille, nombre de cellules), la recherche de l'indice ne nécessite alors qu'une soustraction flottante et une multiplication flottante par coordonnée.

Considérons maintenant la recherche de l'indice (i,j,k) d'une cellule contenant la position u représentée par le triplet entier ($u_x$, $u_y$, $u_z$) tel que défini précédemment. Si on insère l'expression qui définit $u_x$ dans l'expression précédente, on obtient pour la première dimension :

$$i = \frac{u_x \cdot N_x}{2^W}$$

Dans la suite, on peut supposer sans perdre de généralité (quitte à modéliser un environnement plus grand ou plus résolu) que $N_x$ est une puissance de 2 :

$$N_x = 2^{d_x}$$

L'expression pour le calcul de i à partir de $u_x$ devient :

$$i = \frac{u_x}{2^{W-d_x}}$$

Or en arithmétique entière binaire, la division par une puissance de 2 revient à un décalage à droite d'un nombre de bits égal à l'exposant de la puissance :

$$i = (u_x \gg (W - d_x))$$

Le calcul est similaire pour les deux autres dimensions. Ainsi, le calcul de l'indice de la cellule contenant une position $(u_x, u_y, u_z)$ ne nécessite qu'un décalage constant à droite par dimension.

En plus de permettre la localisation rapide des cellules contenant un point représenté par ses coordonnées entières, l'approche permet également de rapidement connaître les coordonnées des cellules pour toute taille de grille de la forme $2^d$ où d est un entier entre 1 et W. En particulier, dans le cas d'approches multi-résolution, les coordonnées entières proposées permettent de refléter l'information avec un paramètre unique quelle que soit la résolution utilisée, à condition que les résolutions considérées soient distinctes d'un facteur qui est une puissance de 2.

Un cas d'utilisation pratique important est les algorithmes de grilles d'occupation à base de quadtree/octree. On montre en effet à l'aide de ce qui précède que la représentation en coordonnées entières peut permettre itérativement de déterminer le parcours hiérarchique dans la structure d'octree ou de quadtree en inspectant les bits dans l'ordre poids fort vers poids faible.

Le bit de poids fort permet de distinguer dans quelle moitié de l'axe la position représentée se trouve. Si le bit vaut 0, la position est dans le demi espace (0, L/2) et s'il vaut 1, elle se situe dans le demi-espace (L/2,L). En regardant le bit suivant, on peut faire la même analyse sur les deux sous régions de la région courante, et ainsi de suite.

En procédant de la sorte dans toutes les dimensions, on parcourt ainsi l'octree ou le quadtree à l'aide d'une unique représentation entière de position. La profondeur maximale résultante étant W.

Prenons par exemple une grille 2D carrée de 16m de côté, avec $x_{min}=0$ et $y_{min}=0$. Considérons la position flottante x=3.5m et y=10.5m. La position entière correspondante vaut pour W=32 :

|   | Flottant | Entier | Entier (binaire) |
|---|----------|--------|------------------|
| x | 3.5 | 939524096 | 00111000 00000000 00000000 00000000 |
| y | 10.5 | 2818572288 | 10101000 00000000 00000000 00000000 |

Pour d=1, la lecture du premier bit indique que la position correspondante est dans la partie basse sur l'axe des x, et haute sur l'axe des y, figure 7A. Ensuite pour d=2, le second bit indique que la position est dans la partie (basse, basse) du carré trouvé en d=1, figure 7B. Ensuite pour d=3, la position est dans la partie (haute, haute) figure 7C, et ainsi de suite figure 7D à 7F.

Dans le cas particulier où la discrétisation spatiale $\delta$ est telle que :

$$\frac{x_{max} - x_{min}}{2^W} = \delta$$

Les coordonnées (l,m) décrites précédemment coïncident avec les coordonnées $(u_x,u_y)$. Si la profondeur de la grille est d, c'est-à-dire qu'il y a $2^d$ cellules sur chaque dimension, la résolution de la représentation est alors :

$$r = \frac{c}{\delta} = 2^{W-d}$$

Ainsi, en fonction de la précision choisie, on peut ne considérer que les W bits de poids fort de la représentation en coordonnées entières.

Par exemple, si nous voulons au moins 1000 cellules sur chaque côté de la grille, nous sélectionnerons d=10 de sorte que $2^d$=1024. Par ailleurs si nous voulons être précis au 50ème de la taille de chaque cellule, il faut que :

$$2^{W-d} \geq 50$$

$$W \geq log_2(50) + d$$

$$W \geq 16$$

Seuls les 16 premiers bits de la représentation entière sont nécessaires pour représenter simultanément une position dans la grille, et un calcul de traversée de grille en entier précis au 50ème de la taille des cellules.

Nous avons vu que dans la méthode, il faut commencer par calculer l'erreur initiale qui nécessite deux produits entiers. Les résultats de ces produits peut entraîner la manipulation de nombres dont la largeur excède les W bits de la représentation, ce qui pose problème pour la mise en œuvre pratique.

Si on regarde plus précisément l'expression de $Err_d(V)$, on voit que les quantités $(m-m_s)$ et $(l-l_s)$ sont majorées par $r=2^{w-d}$ et que les quantités $(m_F-m_s)$ et $(l_F-l_s)$ sont majorées par $2^w$. Si on note T la largeur totale nécessaire pour manipuler les produits on a alors :

$$(T - 1) = 2 \cdot W - d$$

$$W = \frac{T + d - 1}{2}$$

Le produit ne doit pas excéder T-1 et non pas T, car le résultat des produits peut être signé dans le cas général.

En reprenant l'exemple précédent, et en supposant que l'unité arithmétique entière utilisée manipule des nombres sur T=32 bits maximum, pour une grille de profondeur 10, on obtient W=(32+10-1)/2=21. La précision maximale utilisable est W=21 bits. On a alors un calcul de traversée de grille précis à 1 pour $2^{21-10}$, soit précis au 2048ème. Enfin on remarque que pour le calcul des quantités $\Delta m$ et $\Delta l$, les mêmes remarques s'appliquent pour la largeur des nombres et la précision du calcul de traversée.

La résolution du problème en trois dimensions se généralise directement à partir de la résolution en deux dimensions présentée précédemment. L'idée est d'appliquer ce qui précède à la projection de la ligne 3D sur les trois plans de l'espace z=0 (plan Oxy), x=0 (plan Oyz) et y=0 (plan Oxz).

Soit M(l, m, n) un point 3D en coordonnées entières. On forme alors les trois quantités :

$$Err_{d\_xy}(M) \quad = \quad (m - m_s) \cdot (l_t - l_s) - (l - l_s) \cdot (m_t - m_s)$$

$$Err_{d\_yz}(M) \quad = \quad (n - n_s) \cdot (m_t - m_s) - (m - m_s) \cdot (n_t - n_s)$$

$$Err_{d\_xz}(M) \quad = \quad (l - l_s) \cdot (n_t - n_s) - (n - n_s) \cdot (l_t - l_s)$$

De manière analogue à ce qui précède en 2D, en notant V, $V_l$, $V_m$, $V_n$, $V_{lm}$, $V_{ln}$, $V_{mn}$, $V_{lmn}$ les sommets d'une cellule tridimensionnelle, comme sur la figure 8. On a alors :

$$Err_{d\_xy}(V_l) \quad = \quad Err_{d\_xy}(V) - \Delta m$$

$$Err_{d\_xy}(V_m) \quad = \quad Err_{d\_xy}(V) + \Delta l$$

$$Err_{d\_xy}(V_{lm}) \quad = \quad Err_{d\_xy}(V_l) + \Delta l$$

$$Err_{d\_yz}(V_m) \quad = \quad Err_{d\_yz}(V) - \Delta n$$

$$Err_{d\_yz}(V_n) \quad = \quad Err_{d\_yz}(V) + \Delta m$$

$$Err_{d\_yz}(V_{mn}) \quad = \quad Err_{d\_yz}(V_m) + \Delta m$$

$$Err_{d\_xz}(V_n) \quad = \quad Err_{d\_xz}(V) - \Delta l$$

$$Err_{d\_xz}(V_l) \quad = \quad Err_{d\_xz}(V) + \Delta n$$

$$Err_{d\_xz}(V_{ln}) \quad = \quad Err_{d\_xz}(V_n) + \Delta n$$

Où $\Delta l = r \cdot (l_t - l_s)$, $\Delta m = r \cdot (m_t - m_s)$ et $\Delta n = r \cdot (n_t - n_s)$.

De la même façon, on peut ainsi déterminer de façon itérative les estimations d'erreur des différents sommets de la cellule. En regardant le signe des erreurs face par face d'une cellule tridimensionnelle, il sera alors possible de déterminer de manière analogue au cas 2D quelle sera la prochaine cellule traversée par le segment [SF].

Les capteurs de distances utilisés renvoient naturellement de l'information exprimée dans leur repère propre. Ce repère propre est le plus souvent un repère sphérique centré sur le capteur. Le repère sphérique utilisé est décrit sur la figure 9, sur le modèle rayon, longitude, latitude. On suppose que le capteur retourne les trois informations D, $\alpha$, $\omega$ :

- D : distance de la cible
- $\alpha$ : longitude mesurée à partir de l'axe des x
- $\omega$ : latitude, mesurée depuis le plan équatorial

Ces informations sont retournées par le capteur sous la forme de champ de bits entiers, à une précision variable d'un capteur à l'autre.

La conversion en coordonnées cartésiennes nécessite les calculs suivants :

$$x \quad = \quad D \cdot \cos(\omega) \cdot \cos(\alpha)$$

$$y \quad = \quad D \cdot \cos(\omega) \cdot \sin(\alpha)$$

$$z \quad = \quad D \cdot \sin(\omega)$$

Le calcul des fonctions trigonométriques et des multiplications flottantes résultantes est très souvent coûteux à réaliser sur un processeur de calcul embarqué. Par ailleurs, pour exploiter les coordonnées entières présentées précédemment, il faut en plus effectuer la transformée :

$$u_x \quad = \quad 2^W \cdot \frac{D \cdot \cos(\omega) \cdot \cos(\alpha) + R}{2R}$$

$$u_y \quad = \quad 2^W \cdot \frac{D \cdot \cos(\omega) \cdot \sin(\alpha) + R}{2R}$$

$$u_z \quad = \quad 2^W \cdot \frac{D \cdot \sin(\omega) + R}{2R}$$

où R désigne la portée maximale du capteur ($x_{min}$=-R et $x_{max}$=R, de même pour les autres axes). Le calcul des coordonnées entières nécessite une division flottante supplémentaire.

Selon une variante de réalisation, le procédé va calculer les coordonnées entières au moyen d'une étape intermédiaire, qui est le calcul de l'écart au centre, en entier. On introduit pour cela le point K, qui est le centre du repère. On a alors :

$$x_K = \frac{x_{min} + x_{max}}{2}$$

$$y_K = \frac{y_{min} + y_{max}}{2}$$

$$z_K = \frac{z_{min} + z_{max}}{2}$$

Soit, en coordonnées entières :

$$u_x^K = 2^{W-1}$$

$$u_y^K = 2^{W-1}$$

$$u_z^K = 2^{W-1}$$

Les équations de transformations en coordonnées entières présentées précédemment deviennent alors:

$$u_x - u_x^K = D \cdot \frac{2^{W-1} \cdot \cos(\omega) \cdot \cos(\alpha)}{R}$$

$$u_y - u_y^K = D \cdot \frac{2^{W-1} \cdot \cos(\omega) \cdot \sin(\alpha)}{R}$$

$$u_z - u_z^K = D \cdot \frac{2^{W-1} \cdot \sin(\omega)}{R}$$

qui peuvent être réécrites sous la forme :

$$u_x - u_x^K = D \cdot T_x(\alpha, \omega)$$

$$u_y - u_y^K = D \cdot T_y(\alpha, \omega)$$

$$u_z - u_z^K = D \cdot T_z(\omega)$$

Le procédé consiste alors à pré-calculer les fonctions trigonométriques $T_x(\alpha,\omega)$, $T_y(\alpha,\omega)$ et $T_z(\omega)$. Les résultats sont stockés dans une table en entier pour n'avoir à calculer à l'exécution qu'une multiplication entière pour obtenir l'écart au centre en coordonnées entières. Les valeurs de cette table sont alors comprises entre $-2^{W-1}/_R$ et $2^{W-1}/_R$ et vont nécessiter d'être stockées sur un champ de bits d'au plus W bits.

Si on regarde plus précisément la largeur de l'information de distance renvoyée par le capteur L, on voit que $R=2^L$ et que les valeurs de trigonométries peuvent être stockées sur des entiers signés de W-L bits. Par exemple si W=32 bits, et L=16 bits, on va pouvoir tabuler la trigonométrie sur des entiers signés de 16 bits.

De plus, on remarque alors que la quantité $D/_R$ est comprise entre 0 et 1, et que les produits de fonctions trigonométriques sont compris entre -1 et 1. L'écart au centre est ainsi compris entre $-2^{W-1}$ et $2^{W-1}$, et est donc représentable à l'aide d'un entier W bits signé.

Le calcul de la coordonnée entière revient à rajouter $2^{w-1}$ à la valeur d'écart pour former une quantité comprise entre 0 et $2^w$. La transformation du repère sphérique (figure 9) vers le repère cartésien en coordonnées entières ne nécessite alors qu'une multiplication et une addition entière par composante. La taille des tables de trigonométries va dépendre de la sensibilité angulaire du capteur utilisé, mais on peut par exemple typiquement avoir pour un capteur ayant un champ de vision de 100° horizontal x 50° vertical précis au degré, une table de 100x50=5000 valeurs entières. Pour L=16 bits pour la distance, et W=32 pour la résolution entière du calcul de mapping, cela implique de stocker les valeurs sur 16 bits (2 octets) soit des tables de l'ordre de 10Ko pour les coordonnés x et y, 100 octets pour la coordonnée z. Pour des modèles plus résolus, la taille des tables peut devenir prohibitive, il est alors possible de diminuer le besoin en mémoire, au prix d'une multiplication entière supplémentaire en séparant les variables. Par exemple pour $T_x$ on a :

$$T_x(\alpha, \omega) = \frac{2^{(W-1)/2} \cdot \cos(\alpha)}{\sqrt{R}} \cdot \frac{2^{(W-1)/2} \cdot \cos(\omega)}{\sqrt{R}}$$

La taille des tables est réduite alors drastiquement au prix d'une perte en précision.

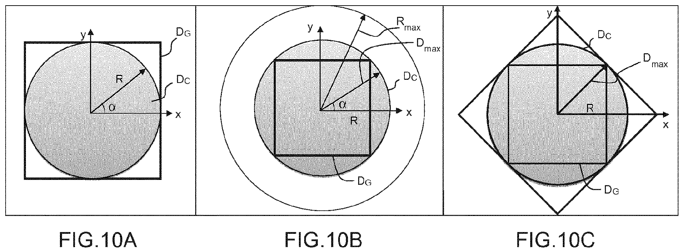

Dans ce qui a été présenté précédemment, on a supposé que le domaine d'étude de la grille couvrait toute la portée du capteur. Le domaine de définition $D_G$ de la grille d'occupation contient ainsi tout le domaine $D_c$ couvert par le capteur de portée maximale R, comme présenté sur la figure 10A.

Dans un cas plus général, on voudra fixer le domaine de définition de la grille indépendamment de la portée du capteur. En effet, la taille de la grille est souvent davantage déterminée par l'application que par les caractéristiques physiques du capteur. On pourra par exemple vouloir étudier un domaine de 50mx50m alors qu'on utilise un capteur avec une portée de 200m. La situation correspondante est présentée sur la figure 10B. On considère une grille de côté 2R, où R est la portée maximale exploitée du capteur. La distance maximale visible du capteur est alors $R_{max}$ et on a : $R_{max} > R$.

Pour une grille de côté 2R, on commence par filtrer les informations de capteurs qui sont en dehors de la sphère de rayon R. Le problème est que les points de la sphère de rayon R ne sont alors pas tous représentables en coordonnées entières, car certains points peuvent être dans la sphère mais en dehors de la grille.

La distance maximale $D_{max}$ atteignable dans la grille est obtenue en chaque sommet de la grille et vaut $D_{max} = \sqrt{2} \cdot R$ en 2D, et $D_{max} = \sqrt{3} \cdot R$ en 3D. En normalisant l'expression précédente par cette nouvelle valeur, on obtient alors :

$$u_x - u_x^K = D \cdot \frac{2^{W-1} \cdot \cos(\omega) \cdot \cos(\alpha)}{D_{max}}$$

$$u_y - u_y^K = D \cdot \frac{2^{W-1} \cdot \cos(\omega) \cdot \sin(\alpha)}{D_{max}}$$

$$u_z - u_z^K = D \cdot \frac{2^{W-1} \cdot \sin(\omega)}{D_{max}}$$

En particulier, dans le cas en 2D, en multipliant haut et bas par $\sqrt{2}$ on obtient :

$$u_x - u_x^K = D \cdot \frac{2^{W-2} \cdot \sqrt{2} \cdot \cos(\omega) \cdot \cos(\alpha)}{R}$$

$$u_y - u_y^K = D \cdot \frac{2^{W-2} \cdot \sqrt{2} \cdot \cos(\omega) \cdot \sin(\alpha)}{R}$$

On vérifie aisément que comme $D_{max} = \sqrt{2} \cdot R$, les coordonnées sont comprises entre $-2^{w-1}$ et $2^{w-1}$ et que ces nombres sont représentables sur des entiers signés de W bits. En revanche, la propriété très intéressante que permet cette normalisation par $\sqrt{2}$ est que si le bit de poids fort est nul, c'est-à-dire que la coordonnée calculée est comprise entre -2^{w-2} et 2^{w-2} , et dans la grille. En effet, normaliser par $D_{max} = \sqrt{2} \cdot R$ revient à placer les points dans une grille de $2\sqrt{2} \cdot R$ de côté. C'est-à-dire comme précédemment, une grille dont le bord est circonscrit au cercle de rayon $D_{max}$. Or la grille dans laquelle on cherche à placer les informations est, elle, de côté 2R. En plaçant la grille circonscrite et inscrite comme sur la figure 10C, on prouve que le côté de la grille inscrite (2R) est égal à la moitié de la diagonale de la grille circonscrite. Cette demi-diagonale vaut $\sqrt{2} \cdot D_{max} = \sqrt{2} \cdot \sqrt{2} \cdot R = 2R$. Par conséquent, la coordonnée 32 bits à la plus grande distance dans la grille circonscrite est à ($D_{max}$, $D_{max}$), soit à une distance de $\sqrt{2} \cdot D_{max}$.

Or on sait que cette coordonnée sera représentée sur W bits entiers. Comme $\sqrt{2} \cdot D_{max} = 2R$, on voit que les coordonnées inférieures qui sont positionnées à au plus R, sont inférieures à $\sqrt{2} \cdot D_{max}/2$ et donc représentable sur un entier signé de W-1 bits.

Par conséquent on peut précalculer la trigonométrie et la stocker dans des tables constantes entières définies par :

$$T_x(\alpha, \omega) \quad = \quad \frac{2^{W-2} \cdot \sqrt{2} \cdot \cos(\omega) \cdot \cos(\alpha)}{R}$$

$$T_y(\alpha, \omega) \quad = \quad \frac{2^{W-2} \cdot \sqrt{2} \cdot \cos(\omega) \cdot \sin(\alpha)}{R}$$

On est alors assuré que les produit entiers $D \cdot T_x$ et $D \cdot T_y$ satisferont la contrainte de largeur de calcul de W bits. Le résultat du calcul des coordonnées entières peut donc se résumer à :

A3) Former le produit Distance X Trigonométrie,

B3) Vérifier que le bit de poids fort est nul, sinon le point n'est pas dans la grille, mais dans la sphère de rayon R,

C3) Multiplier le résultat par 2 (décalage d'un rang à gauche) pour obtenir une coordonnée entière de W bits, et rajouter la coordonnée du centre (2^{w-1}). En conclusion le paramétrage ainsi défini permet de fixer la taille de l'environnement indépendamment de la portée du capteur, tout en garantissant la taille finale de la représentation. La résolution spatiale sera alors un peu plus faible (bit de poids faible toujours à 0) mais le calcul entier ne nécessitera pas plus de bits et respectera la contrainte de largeur W.

Cette approche se généralise directement à la 3D, en prenant $D_{max} = \sqrt{3} \cdot R$.

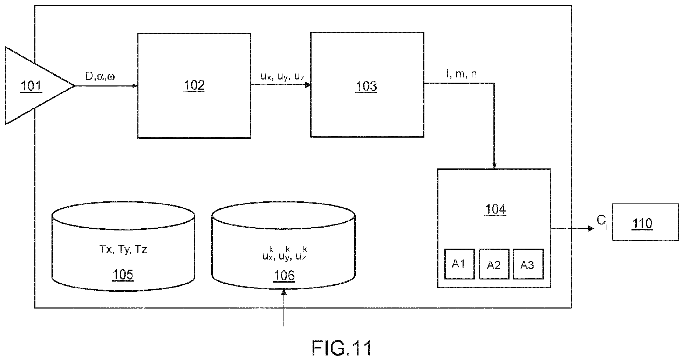

La figure 11 illustre un exemple de système de recherche de cellules selon l'invention donné dans le cas d'un capteur équipant le véhicule 1. Le capteur 100 est positionné sur le véhicule 1 et a une portée et un champ de vision donnés. Le capteur 100 transmet les paramètres mesurés D, $\alpha$, $\omega$ correspondant à une première mesure de distance à un obstacle F, à un premier bloc 101 de traitement des données. Le premier bloc 101 est adapté à transformer les coordonnées sphériques en des coordonnées cartésiennes, $u_x$, $u_y$, $u_z$. Les coordonnées transformées sont ensuite transmises à un module 102 de discrétisation des coordonnées sur la grille fine avec un pas de $\delta$. Les coordonnées « discrétisées » sont traitées par un algorithme embarqué dans le module 103 qui exécute les étapes de l'algorithme de recherche de cellules. L'algorithme A1 va rechercher les cellules traversées en considérant une erreur nulle par rapport à une droite. L'algorithme A2 va tenir compte d'une valeur d'erreur comprise dans un intervalle d'erreur donné et l'algorithme A3 va rechercher des cellules traversées dans un cône défini par l'axe de vision du capteur. En sortie du module de recherche des cellules 103, une liste des cellules sélectionnées {$c_i$} est transmise par exemple à un opérateur ou un système d'alerte ou d'affichage 110.

Le module 102 comporte un algorithme permettant de représenter dans le domaine numérique un nombre entier tel qu'il a été décrit ci-dessus, afin de représenter sur un nombre de bits donnés la position réelle des coordonnées des points ou d'une cellule.

Le système comprend une mémoire interne 105 comprenant les tables trigonométriques Tx, Ty, Tz utilisées pour la transformation des coordonnées du repère sphérique au repère cartésien. Cette mémoire peut être figée initialement.

Il comporte aussi une base de données 106 contenant la position des capteurs. La mémoire peut être renseignée de manière statique ou bien être mise à jour en temps réel afin de prendre en compte le déplacement des capteurs.

Les étapes qui viennent d'être décrites peuvent être modifiées pour être mises en œuvre pour la détermination de cellules susceptibles d'être occupées et selon un parcours ou un trajet d'une voiture comprenant un ensemble de segments de droite par exemple, un trajet non linéaire. La mesure peut être réalisée en prenant comme référence, non pas une droite, mais un axe appartenant au cône d'ouverture du capteur de détection. Le paramètre utilisé pour déterminer le signe de l'erreur pourra être une valeur prédéfinie.

L'exemple est décrit pour l'acquisition des données avec un capteur. Les étapes pourront être réitérées sur plusieurs capteurs, les résultats provenant des différents capteurs pouvant être fusionnés selon une méthode connue de l'art antérieur, par exemple, en utilisant le procédé décrit dans la demande de brevet FR1558919 du demandeur.

Sans sortir du cadre de l'invention, le procédé peut aussi être utilisé pour déterminer les cellules à utiliser pour la reconstitution d'une image en trois dimensions.

L'invention décrite dans ce document permet la réalisation d'un système de perception de l'environnement 2D ou 3D construit à l'aide de plusieurs capteurs de distances hétérogènes placés en différents emplacements. La particularité du système est qu'il emploie notamment pour le mapping des informations d'occupation, une représentation numérique hiérarchique compatible avec l'arithmétique entière traditionnelle disponible dans la majorité des systèmes de calcul. Le calcul du mapping est alors réalisé de façon extrêmement efficace avec de l'arithmétique entière uniquement, et avec la même précision spatiale que les approches flottantes de référence.

De plus l'invention est compatible avec des structures de grilles qui comprennent des cellules de tailles différentes. Cela permet par exemple de définir des grilles d'occupation dont la résolution est adaptée à celles des capteurs, en particulier dont la résolution diminue à mesure que l'éloignement des cellules augmente.

## Revendications

1. Procédé mis en œuvre par ordinateur de perception de corps matériels destiné à détecter et déterminer la position desdits corps sur une grille d'occupation G à au moins 2 dimensions, ayant un premier pas de résolution $R_G$, et comprenant un ensemble de cellules représentées par des sommets et des segments reliant ces sommets, chaque cellule de la grille d'occupation G ayant une probabilité d'occupation par un corps matériel, le procédé utilisant un capteur de détection d'obstacles positionné en un point source S et comprenant les étapes suivantes :

   a) Acquisition par ledit capteur d'une mesure de la position d'un corps matériel détecté en un point F ;
   b) Définition (401) des coordonnées des points S et F dans un espace discrétisé à l'aide d'un pas spatial $\delta$, le pas spatial $\delta$ étant inférieur au pas de résolution $R_G$ de la grille G, la taille des cellules étant définie par *taille*(*c*)

   $= r \cdot \delta$, $r \in \mathbb{N}$, un point M de coordonnées (l,m) dans cet espace discrétisé se situant dans l'espace continu

   $$x = l \cdot \delta$$

   au point (x,y), où $y = m \cdot \delta$ les points S et F ayant respectivement des coordonnées $(l_S, m_S)$ et $(l_F, m_F)$ ;
   c) Détermination (402) de la cellule $c_s$ de la grille d'occupation G contenant le point S ;
   d) Détermination des coordonnées, dans l'espace discrétisé, d'un sommet initial V0 de la cellule $c_s$ ;
   e) Calcul (404) de la valeur d'un paramètre d'erreur E, entier, en utilisant une fonction d'erreur $Err_d(M)$ permettant d'évaluer, dans l'espace discrétisé, un écart entre un point de l'espace et une droite reliant les points S et F, ledit paramètre d'erreur E étant initialisé à la valeur prise par ladite fonction d'erreur pour ledit sommet initial V0 de la cellule $c_s$,
   f) Calcul de la valeur dudit paramètre d'erreur E pour au moins un premier sommet $V1_i$ de la cellule courante $c_i$ de la grille en cours d'observation, correspondant à $Err_d(V1_i)$, ce calcul consistant à réaliser une opération d'addition ou de soustraction entre nombres entiers, entre d'une part ladite valeur du paramètre E obtenue pour le sommet initial $V0_i$ de la cellule courante $c_i$, et correspondant à $Err_d(V0_i)$, et d'autre part une valeur d'incrément entière ($\Delta$) prédéfinie en fonction des coordonnées des points S et F dans l'espace discrétisé,
   g) Etudier la valeur du paramètre d'erreur E précédemment calculée par rapport à une valeur de référence pour déterminer une cellule suivante $c_{i+1}$ traversée par le trajet [SF] ;
   h) Calculer, si nécessaire, la valeur dudit paramètre d'erreur E pour un sommet initial $V0_{i+1}$ de la cellule suivante $c_{i+1}$, correspondant à $Err_d(V0_{i+1})$, ce calcul consistant à réaliser une opération d'addition ou de soustraction entre nombres entiers, entre d'une part ladite valeur du paramètre E obtenue pour au moins un sommet $V_i$ de la cellule courante $c_i$, et correspondant à $Err_d(V)$, et d'autre part une valeur d'incrément entière ($\Delta$) prédéfinie

en fonction des coordonnées des points S et F dans l'espace discrétisé,

i) Utiliser (408) cette cellule suivante $c_{i+1}$ et ladite valeur du paramètre d'erreur E obtenue pour ledit sommet initial $V0_{i+1}$ de cette cellule comme point de départ et réitérer les étapes f à h jusqu'à atteindre la cellule $c_F$ contenant le point final F,

j) Déterminer (405) la liste $\{c_i\}$ des cellules considérées dans les étapes précédentes et situées sur le trajet [SF] ou situées à une distance prédéfinie du trajet [SF] et mettre à jour la valeur de probabilité d'occupation de chacune des cellules listées dans ladite grille d'occupation G.

2. Procédé mis en œuvre par ordinateur selon la revendication 1 dans lequel, au cours de l'étape f, on calcule, pour chaque sommet V « supplémentaire » de la cellule courante $c_i$, autre que le sommet initial, une valeur dudit paramètre d'erreur E, correspondant à $Err_d(V)$, ce calcul consistant à réaliser une opération d'addition ou de soustraction entre nombres entiers, entre d'une part ladite valeur du paramètre E obtenue pour le sommet initial $V0_i$ de la cellule courante $c_i$, et correspondant à $Err_d(V0_i)$, et d'autre part une valeur d'incrément entière ($\Delta$) prédéfinie en fonction des coordonnées des points S et F dans l'espace discrétisé, et dans lequel, au cours de l'étape g, on effectue les étapes suivantes :

- on recherche si une des valeurs dudit paramètre d'erreur E obtenues pour les sommets supplémentaires est nulle pour un sommet identifié et, dans l'affirmatif, ce sommet est par suite considéré comme le sommet initial de la cellule suivante $c_{i+1}$, le paramètre d'erreur E correspondant à ce nouveau sommet initial étant égal à celui préalablement calculé pour ledit sommet identifié ;
et dans la négative,
- on recherche un côté, ou une face, de la cellule courante ci définie par des sommets supplémentaires associés à des valeurs du paramètre E de signes opposés, ladite cellule suivante $c_{i+1}$ étant alors la cellule adjacente à la cellule courante $c_i$ partageant le même côté, un des sommets supplémentaires appartenant à ce côté commun étant alors considéré comme le sommet initial de la cellule suivante $c_{i+1}$, le paramètre d'erreur E correspondant à ce nouveau sommet initial étant égal à celui préalablement calculé pour ce dit sommet ;
et dans lequel la liste $\{c_i\}$ des cellules définies à l'étape j correspond aux cellules traversées par le segment de droite entre les points S et F.

3. Procédé mis en œuvre par ordinateur selon la revendication 1 ou 2, dans lequel la grille d'occupation est définie en 2 dimensions et dans lequel, la fonction d'erreur $Err_d(M)$ est définie par :

$$Err_d(M) = (m - m_s) \cdot (l_F - l_s) - (l - l_s) \cdot (m_F - m_s).$$

et dans lequel, au cours de l'étape f, on calcule une valeur du paramètre d'erreur, pour chaque sommet V « supplémentaire » de la cellule courante ci, autre que le sommet initial V0, et désignés $V_l$, $V_m$ et $V_{lm}$ , $V_{lm}$ étant le sommet opposé au sommet initial, selon les opérations suivantes :

$$Err_d(V_l) \quad = \quad Err_d(V) - \Delta m$$

$$Err_d(V_m) \quad = \quad Err_d(V) + \Delta l$$

$$Err_d(V_{lm}) \quad = \quad Err_d(V_l) + \Delta l$$

Où $\Delta l = r \cdot (l_F - l_s)$ et $\Delta m = r \cdot (m_F - m_s)$

4. Procédé mis en œuvre par ordinateur selon les revendications 2 et 3, dans lequel lors de l'étape g, en comparant le signe des erreurs calculées on détermine la prochaine cellule traversée, de la manière suivante:

o Si $Err_d(V_{lm})=0$, alors la cellule ci+1 correspond à la cellule ayant un sommet initial correspondant à $V_{lm}$ et le paramètre d'erreur E associé à ce nouveau sommet initial est égal à $Err_d(V_{lm})$,
o Si $Err_d(V_{lm})$ et $Err_d(V_l)$ sont de signes opposés, alors la cellule ci+1 correspond à la cellule ayant un sommet initial correspondant à $V_l$ et le paramètre d'erreur E associé à ce nouveau sommet initial est égal à $Err_d(V_l)$,
o Sinon la cellule $c_{i+1}$ correspond à la cellule ayant un sommet initial correspondant à $V_{lm}$ et le paramètre

d'erreur E associé à ce nouveau sommet initial est égal à $Err_d(V_m)$.

5. Procédé mis en œuvre par ordinateur selon la revendication 1 ou 2, dans lequel la grille d'occupation est définie en 3 dimensions et dans lequel, la fonction d'erreur $Err_d(M)$ est définie pour un point $M(l, m, n)$ en coordonnées entières de la façon suivante :

$$Err_{d\_xy}(M) \quad = \quad (m - m_s) \cdot (l_t - l_s) - (l - l_s) \cdot (m_t - m_s)$$

$$Err_{d\_yz}(M) \quad = \quad (n - n_s) \cdot (m_t - m_s) - (m - m_s) \cdot (n_t - n_s)$$

$$Err_{d\ xz}(M) \quad = \quad (l - l_s) \cdot (n_t - n_s) - (n - n_s) \cdot (l_t - l_s)$$

et dans lequel, au cours de l'étape f, on calcule une valeur du paramètre d'erreur, pour chaque sommet V « supplémentaire » de la cellule courante ci, autre que le sommet initial V0, et désignés $V_l$, $V_m$, $V_n$, $V_{lm}$, $V_{ln}$, $V_{mn}$, $V_{lmn}$, $V_{lmn}$ étant le sommet d'une cellule tridimensionnelle opposé au sommet initial, selon les opérations suivantes :

$$Err_{d\_xy}(V_l) \quad = \quad Err_{d\_xy}(V) - \Delta m$$

$$Err_{d\_xy}(V_m) \quad = \quad Err_{d\_xy}(V) + \Delta l$$

$$Err_{d\_xy}(V_{lm}) \quad = \quad Err_{d\_xy}(V_l) + \Delta l$$

$$Err_{d\_yz}(V_m) \quad = \quad Err_{d\_yz}(V) - \Delta n$$

$$Err_{d\_yz}(V_n) \quad = \quad Err_{d\_yz}(V) + \Delta m$$

$$Err_{d\_yz}(V_{mn}) \quad = \quad Err_{d\_yz}(V_m) + \Delta m$$

$$Err_{d\_xz}(V_n) \quad = \quad Err_{d\_xz}(V) - \Delta l$$

$$Err_{d\_xz}(V_l) \quad = \quad Err_{d\_xz}(V) + \Delta n$$

$$Err_{d\_xz}(V_{ln}) \quad = \quad Err_{d\_xz}(V_n) + \Delta n$$

Où $\Delta l = r \cdot (l_t - l_s)$, $\Delta m = r \cdot (m_t - m_s)$ et $\Delta n = r \cdot (n_t - n_s)$

6. Procédé mis en œuvre par ordinateur selon la revendication 1 dans lequel, au cours de l'étape j, les cellules listées correspondent aux cellules pour lesquelles un de leurs sommets est associé avec une valeur de paramètre d'erreur comprise entre une valeur d'erreur minimale ($e_{min}$) et une valeur d'erreur maximale ($e_{max}$) prédéfinies..

7. Procédé mis en œuvre par ordinateur selon la revendication 5, dans lequel les valeurs d'erreur minimale et maximale sont fonction, pour une cellule donnée, de la distance entre le sommet initial de cette cellule et ledit sommet S.

8. Procédé mis en œuvre par ordinateur selon l'une des revendications précédentes, dans lequel les coordonnées d'un point M dans l'espace discrétisé sont représentées, sur chaque axe d'un repère, par un entier défini par un mot binaire de W bits, et dans lequel un point M appartient à une cellule de la grille d'occupation, chaque cellule étant définie, pour chaque axe du repère par un indice entier défini par un mot binaire de d bits, et dans lequel W est supérieur à d et dans lequel W et d sont choisis de sorte que

$$d < W \leq \frac{T + d - 1}{2}$$

Avec T correspondant au nombre de bits maximal pouvant être manipulés par une unité arithmétique entière utilisée pour la mise en œuvre d'une opération de multiplication pour réaliser ledit calcul (404) de la valeur d'un paramètre d'erreur E, à l'étape e.

9. Procédé mis en œuvre par ordinateur selon la revendication 1, dans lequel les coordonnées d'un point M dans l'espace discrétisé sont représentées, sur chaque axe d'un repère, par un entier défini par un mot binaire de W bits, et dans lequel on détermine les coordonnées entières ($u_x$, $u_y$, $u_z$) d'un point M à partir de coordonnées sphériques en calculant l'écart au centre du repère K

$$u_x - u_x^K \quad = \quad D \cdot T_x(\alpha, \omega)$$

$$u_y - u_y^K \quad = \quad D \cdot T_y(\alpha, \omega)$$

$$u_z - u_z^K \quad = \quad D \cdot T_z(\omega)$$

avec D la distance de la cible, $\alpha$ la longitude mesurée à partir de l'axe x, $\omega$ la latitude mesurée depuis le plan équatorial, et $T_x(\alpha, \omega)$, $T_y(\alpha, \omega)$ et $T_z(\omega)$ sont des tables précalculées de valeurs entières (105) mémorisées définies par :

$$T_x(\alpha, \omega) \quad = \quad \frac{2^{W-1} \cdot \cos(\omega) \cdot \cos(\alpha)}{R}$$

$$T_y(\alpha, \omega) \quad = \quad \frac{2^{W-1} \cdot \cos(\omega) \cdot \sin(\alpha)}{R}$$

$$T_z(\omega) \quad = \quad \frac{2^{W-1} \cdot \sin(\omega)}{R}$$

R désigne la portée maximale du capteur,

$$u_x^K \quad = \quad 2^{W-1}$$

$$u_y^K \quad = \quad 2^{W-1}.$$

$$u_z^K \quad = \quad 2^{W-1}$$

10. Procédé mis en œuvre par ordinateur selon l'une des revendications précédentes **caractérisé en ce que** pour une grille de côté 2R, on filtre les informations de capteurs qui sont en dehors de la sphère de rayon R avant d'exécuter les étapes du procédé.

11. Procédé mis en œuvre par ordinateur selon la revendication 9 **caractérisé en ce que** l'on normalise les valeurs des tables précitées par une valeur $D_{max} = \sqrt{2} \cdot R$ en 2 dimensions et $D_{max} = \sqrt{3} \cdot R$ en 3 dimensions.

12. Dispositif pour déterminer les coordonnées de cellules c$_i$ susceptibles d'être traversées dans un espace d'observation représenté par une grille G ayant un premier pas de résolution, une cellule étant représentée par des sommets et des côtés ou segments reliant ces sommets, **caractérisé en ce qu'**il comporte au moins les éléments suivants :

• Un ou plusieurs capteurs (101) adaptés à mesurer les coordonnées d'un point mesuré dans le pas de résolution de la grille situé à une distance de la cible F,
• Un module (103) de discrétisation des coordonnées mesurées avec un pas de résolution spatial δ inférieur au pas R$_G$ de résolution de la grille,
• Un module (104) de traitement des coordonnées discrétisées adaptées à exécuter les étapes du procédé selon l'une des revendications 1 à 11.

13. Dispositif selon la revendication 12, **caractérisé en ce que** l'espace d'observation est défini par un capteur embarqué sur un véhicule (1) en déplacement et **en ce qu'**une cellule sélectionnée est renseignée par une valeur de probabilité d'occupation par un obstacle.


**Patentansprüche**

1. Computerimplementiertes Verfahren zur Wahrnehmung von materiellen Körpern, dazu bestimmt, die Position der Körper in einem Belegungsraster G mit mindestens 2 Dimensionen zu bestimmen, mit einer ersten Auflösungsteilung R$_G$, und umfassend eine Gruppe von Zellen, welche durch Peaks und Segmente dargestellt sind, welche diese Peaks verbinden, wobei jede Zelle des Belegungsrasters G eine Belegungswahrscheinlichkeit durch einen materiellen Körper aufweist, wobei das Verfahren einen Sensor zur Detektion von Hindernissen verwendet, welcher an einem Quellpunkt S positioniert ist und folgende Schritte umfasst:

a) Erfassung, durch den Sensor, einer Positionsmessung eines materiellen Körpers, welcher an einem Punkt F detektiert wurde;
b) Definition (401) der Koordinaten der Punkte S und F in einem diskretisierten Raum mit einem räumlichen Abstand δ, wobei die räumliche Teilung δ kleiner als die Auflösungsteilung R$_G$ des Rasters G ist, wobei die Größe der Zellen definiert ist durch *Größe(c)* = r · δ, r ∈ N, wobei ein Punkt M mit Koordinaten (l,m) in diesem

$$x = l \cdot \delta$$
$$y = m \cdot \delta$$

diskretisierten Raum sich im kontinuierlichen Raum am Punkt (x,y) befindet, wobei wobei die Punkte S und F jeweils die Koordinaten (l$_s$,m$_s$) und (l$_F$, M$_F$) aufweisen;
c) Bestimmung (402) der Zelle c$_s$ des Belegungsrasters G, welche den Punkt S enthält;
d) Bestimmung der Koordinaten, in dem diskretisierten Raum, eines Anfangs-Peaks V0 der Zelle c$_s$;
e) Berechnung (404) des Wertes eines ganzzahligen Fehlerparameters E, unter Verwendung einer Fehlerfunktion Err$_d$(M), die es ermöglicht, in dem diskretisierten Raum einen Abstand zwischen einem Punkt des Raums und einer Geraden zu bewerten, welche die Punkte S und F verbindet, wobei der Fehlerparameter E auf den Wert initialisiert wird, welchen die Fehlerfunktion für den Anfangs-Peak V0 der Zelle c$_s$ annimmt,
f) Berechnung des Wertes des Fehlerparameters E für mindestens einen ersten Peak V1$_i$, der augenblicklichen Zelle c$_i$ des augenblicklich beobachteten Rasters, welcher Err$_d$(V1$_i$) entspricht, wobei diese Berechnung darin besteht, eine Additions- oder Subtraktionsoperation zwischen Ganzzahlen vorzunehmen, zwischen dem für den Anfangs-Peak V0$_i$ der augenblicklichen Zelle c$_i$, und welcher Err$_d$(V0$_i$) entspricht, erzielten Wert des Parameters E einerseits, und andererseits einem ganzzahligen Inkrementwert (Δ), welcher angesichts der Koordinaten der Punkte S und F in dem diskretisierten Raum vorbestimmt ist,
g) Untersuchung des Wertes des zuvor berechneten Fehlerparameters E in Bezug auf einen Referenzwert zum Bestimmen einer folgenden Zelle c$_{i+1}$, welche durch die Strecke [SF] durchquert wird;
f) Berechnung, bei Bedarf, des Wertes des Fehlerparameters E für einen Anfangs-Peak V0$_{i+1}$, der folgenden Zelle c$_{i+1}$, welcher Err$_d$(V0$_{i+1}$) entspricht, wobei diese Berechnung darin besteht, eine Additions- oder Subtraktionsoperation zwischen Ganzzahlen vorzunehmen, zwischen dem für mindestens einen Peak V$_i$ der augenblicklichen Zelle c$_i$, und welcher Err$_d$(V$_l$) entspricht, erzielten Wert des Parameters E einerseits, und andererseits einem ganzzahligen Inkrementwert (Δ), welcher angesichts der Koordinaten der Punkte S und F in dem diskretisierten Raum vorbestimmt ist,

i) Verwendung (408) dieser folgenden Zelle $c_{i+1}$ und des Wertes des Fehlerparameters E, welcher für den Anfangs-Peak $V0_{i+1}$ dieser Zelle erzielt wurde, als Ausgangspunkt und Wiederholung der Schritte f bis h, bis zum Erreichen der Zelle $c_F$, welche den Endpunkt F enthält,

j) Bestimmung (405) der Liste $\{c_i\}$ der in den vorherigen Schritten betrachteten Zellen, welche sich auf der Strecke [SF] befinden oder in einem vorbestimmten Abstand von der Strecke [SF] befinden und Aktualisieren des Wertes der Belegungswahrscheinlichkeit einer jeden der aufgelisteten Zellen in dem Belegungsraster G.

2. Computerimplementiertes Verfahren nach Anspruch 1, wobei man im Zuge des Schrittes f für jeden "zusätzlichen" Peak V der augenblicklichen Zelle $c_i$, welche sich vom Anfangs-Peak unterscheidet, einen Wert des Fehlerparameters E, welcher $Err_d(V)$ entspricht, berechnet, wobei diese Berechnung darin besteht, eine Additions- oder Subtraktionsoperation zwischen Ganzzahlen vorzunehmen, zwischen dem für den Anfangs-Peak $V0_i$ der augenblicklichen Zelle $c_i$, und welcher $Err_d(V0_1)$ entspricht, erzielten Wert des Parameters E einerseits, und andererseits einem ganzzahligen Inkrementwert ($\Delta$), welcher angesichts der Koordinaten der Punkte S und F in dem diskretisierten Raum vorbestimmt ist, und wobei man im Zuge des Schrittes g folgende Schritte durchführt:

- man sucht, ob einer der Werte des Fehlerparameters E, welche für die zusätzlichen Peaks erzielt wurden, für einen identifizierten Peak gleich null ist, und wenn ja, wird dieser Peak anschließend als der Anfangs-Peak der folgenden Zelle $c_{i+1}$ betrachtet, wobei der Fehlerparameter E, welcher diesem neuen Anfangs-Peak entspricht, gleich dem zuvor für den identifizierten Peak berechneten Wert ist;

und wenn nicht,

- man eine Seite oder eine Fläche der augenblicklichen Zelle $c_i$ sucht, welche durch zusätzliche Peaks definiert wird, welche Werten des Fehlerparameters E zugeordnet sind, mit umgekehrten Vorzeichen, wobei die folgende Zelle $c_{i+1}$ dann die an die augenblickliche Zelle $c_i$ angrenzende Zelle ist, welche die gleiche Seite gemeinsam hat, wobei einer der zusätzlichen Peaks, welcher zu dieser gemeinsamen Seite gehört, als der Anfangs-Peak der folgenden Zelle $c_{i+1}$ betrachtet wird, wobei der diesem neuen Anfangs-Peak entsprechende Fehlerparameter E gleich demjenigen ist, welcher zuvor für diesen Peak berechnet wurde;

und wobei die Liste $\{c_i\}$ der im Schritt j definierten Zellen denjenigen Zellen entspricht, welche durch das Geradensegment zwischen den Punkten S und F durchquert werden.

3. Computerimplementiertes Verfahren nach Anspruch 1 oder 2, wobei das Belegungsraster in 2 Dimensionen definiert ist und wobei die Fehlerfunktion $Err_d(M)$ definiert wird durch:

$$Err_d(M) = (m - m_S) \cdot (l_F - l_S) - (l - l_S) \cdot (m_F - m_S).$$

und wobei man im Zuge des Schrittes f einen Wert des Fehlerparameters für jeden "zusätzlichen" Peak V der augenblicklichen Zelle $c_i$ mit Ausnahme des Anfangs-Peaks V0 berechnet, und welche bezeichnet sind als $V_l$, $V_m$ et $V_{lm}$, , wobei $V_{lm}$ der dem Anfangs-Peak gegenüberliegende Peak ist, entsprechend folgenden Operationen:

$$Err_d(V_l) \quad = \quad Err_d(V) - \Delta m$$

$$Err_d(V_m) \quad = \quad Err_d(V) + \Delta l$$

$$Err_d(V_{lm}) \quad = \quad Err_d(V_l) + \Delta l$$

wobei $\Delta l = r \cdot (l_F - l_S)$ und $\Delta m = r \cdot (m_F - m_S)$

4. Computerimplementiertes Verfahren nach den Ansprüchen 2 und 3, wobei man im Zuge des Schrittes g, beim Vergleichen des Vorzeichens der berechneten Fehler, die nächste durchquerte Zelle wie folgt bestimmt:

∘ wenn $Err_d(V_{lm})=0$, dann entspricht die Zelle ci+1 derjenigen Zelle, welche einen Anfangs-Peak besitzt, welcher $V_{lm}$ entspricht, und der diesem neuen Anfangs-Peak zugeordnete Fehlerparameter E ist gleich $Err_d(V_{lm})$,

∘ wenn $Err_d(V_{lm})$ und $Err_d(V_l)$ entgegengesetzte Vorzeichen besitzen, dann entspricht die Zelle ci+1 derjenigen Zelle, welche einen Anfangs-Peak besitzt, welcher $V_1$ entspricht, und der diesem neuen Anfangs-Peak zugeordnete Fehlerparameter E ist gleich $Err_d(V_1)$,

∘ wenn nicht, entspricht die Zelle $c_{i+1}$ derjenigen Zelle, welche einen Anfangs-Peak besitzt, welcher $V_{lm}$ entspricht, und der diesem neuen Anfangs-Peak zugeordnete Fehlerparameter E ist gleich $Err_d(V_m)$.

5. Computerimplementiertes Verfahren nach Anspruch 1 oder 2, wobei das Belegungsraster in 3 Dimensionen definiert ist und wobei die Fehlerfunktion $Err_d(M)$ für einen Punkt M(l, m, n) in ganzzahligen Koordinaten wie folgt definiert wird:

$$Err_{d\_xy}(M) \quad = \quad (m - m_s) \cdot (l_t - l_s) - (l - l_s) \cdot (m_t - m_s)$$

$$Err_{d\_yz}(M) \quad = \quad (n - n_s) \cdot (m_t - m_s) - (m - m_s) \cdot (n_t - n_s)$$

$$Err_{d\_xz}(M) \quad = \quad (l - l_s) \cdot (n_t - n_s) - (n - n_s) \cdot (l_t - l_s)$$

und wobei man im Zuge des Schrittes f einen Wert des Fehlerparameters für jeden "zusätzlichen" Peak V der augenblicklichen Zelle $c_i$ mit Ausnahme des Anfangs-Peaks V0 berechnet, und welche bezeichnet sind als $V_1$, $V_m$, $V_n$, $V_{lm}$, $V_{ln}$, $V_{mn}$, $V_{lmn}$, wobei $V_{lmn}$ der Peak einer dreidimensionalen Zelle ist, welcher dem Anfangs-Peak gegenüberliegt, entsprechend folgenden Operationen:

$$Err_{d\_xy}(V_l) \quad = \quad Err_{d\_xy}(V) - \Delta m$$

$$Err_{d\_xy}(V_m) \quad = \quad Err_{d\_xy}(V) + \Delta l$$

$$Err_{d\_xy}(V_{lm}) \quad = \quad Err_{d\_xy}(V_l) + \Delta l$$

$$Err_{d\_yz}(V_m) \quad = \quad Err_{d\_yz}(V) - \Delta n$$

$$Err_{d\_yz}(V_n) \quad = \quad Err_{d\_yz}(V) + \Delta m$$

$$Err_{d\_yz}(V_{mn}) \quad = \quad Err_{d\_yz}(V_m) + \Delta m$$

$$Err_{d\_xz}(V_n) \quad = \quad Err_{d\_xz}(V) - \Delta l$$

$$Err_{d\_xz}(V_l) \quad = \quad Err_{d\_xz}(V) + \Delta n$$
$$Err_{d\_xz}(V_{ln}) \quad = \quad Err_{d\_xz}(V_n) + \Delta n$$

wobei $\Delta l = r \cdot (l_t - l_s)$, $\Delta m = r \cdot (m_t - m_s)$ und $\Delta n = r \cdot (n_t - n_s)$

6. Computerimplementiertes Verfahren nach Anspruch 1, wobei, im Zuge des Schrittes j, die aufgelisteten Zellen denjenigen Zellen entsprechen, bei welchen einer ihrer Peaks einem Fehlerparameterwert zugeordnet ist, welcher zwischen einem vorbestimmten minimalen Fehlerwert ($e_{min}$) und einem vorbestimmten maximalen Fehlerwert ($e_{max}$) liegt.

7. Computerimplementiertes Verfahren nach Anspruch 5, wobei der minimale und der maximale Fehlerwert für eine gegebene Zelle von dem Abstand zwischen dem Anfangs-Peak dieser Zelle und dem Peak S abhängt.

8. Computerimplementiertes Verfahren nach einem der vorhergehenden Ansprüche, wobei die Koordinaten eines Punktes M in dem diskretisierten Raum auf jeder Achse eines Koordinatensystems dargestellt sind, durch eine Ganzzahl, welche durch ein binäres Wort mit W Bits definiert wird, und wobei ein Punkt M zu einer Zelle des Belegungsrasters gehört, wobei jede Zelle für jede Achse des Koordinatensystems durch einen ganzzahligen Index definiert wird, welche durch ein binäres Wort mit d Bits definiert wird, und wobei W größer ist als d und wobei W und d so gewählt sind, dass:

$$d < W \leq \frac{T + d - 1}{2}$$

wobei T der maximalen Bit-Anzahl entspricht, welche durch eine Ganzzahl-Arithmetik-Einheit zur Implementierung einer Multiplikationsoperation zur Ausführung der Berechnung (404) des Wertes eines Fehlerparameters E, im Schritt e, manipuliert werden können.

9. Computerimplementiertes Verfahren nach Anspruch 1, wobei die Koordinaten eines Punktes M in dem diskretisierten Raum auf jeder Achse eines Koordinatensystems durch eine Ganzzahl dargestellt sind, welche durch ein binäres Wort mit W Bits definiert ist, wobei man die ganzzahligen Koordinaten $(u_x, u_y, u_z)$ eines Punktes M anhand von sphärischen Koordinaten bestimmt, indem man den Abstand zum Mittelpunkt des Koordinatensystems K berechnet,

$$u_x - u_x^K \quad = \quad D \cdot T_x(\alpha, \omega)$$

$$u_y - u_y^K \quad = \quad D \cdot T_y(\alpha, \omega)$$

$$u_z - u_z^K \quad = \quad D \cdot T_z(\omega)$$

wobei D der Abstand zum Ziel, $\alpha$ der ab der Achse x gemessene Längengrad, $\omega$ der ab der Äquatorebene gemessene Breitengrad, und $T_x(\alpha, \omega)$, $T_y(\alpha, \omega)$ und $T_z(\omega)$ vorberechnete Tabellen von gespeicherten Ganzzahlwerten (105) sind, definiert durch:

$$T_x(\alpha, \omega) \quad = \quad \frac{2^{W-1} \cdot \cos(\omega) \cdot \cos(\alpha)}{R}$$

$$T_y(\alpha, \omega) \quad = \quad \frac{2^{W-1} \cdot \cos(\omega) \cdot \sin(\alpha)}{R}$$

$$T_z(\omega) \quad = \quad \frac{2^{W-1} \cdot \sin(\omega)}{R}$$

wobei R die maximale Reichweite des Sensors bezeichnet,

$$u_x^K \quad = \quad 2^{W-1}$$

$$u_y^K \quad = \quad 2^{W-1}$$

$$u_z^K \quad = \quad 2^{W-1}$$

10. Computerimplementiertes Verfahren nach einem der vorhergehenden Ansprüche, **dadurch gekennzeichnet, dass** man bei einem Raster mit Seitenlänge 2R die Informationen der Sensoren filtert, welche sich außerhalb der Kugel mit Radius R befinden, bevor man die Schritte des Verfahrens ausführt.

11. Computerimplementiertes Verfahren nach Anspruch 9, **dadurch gekennzeichnet, dass** man die Werte der vorgenannten Tabellen durch einen Wert $D_{max} = \sqrt{2} \cdot R$ in 2 Dimensionen und $D_{max} = \sqrt{3} \cdot R$ in 3 Dimensionen normalisiert.

12. Vorrichtung zum Bestimmen der Koordinaten von Zellen $c_i$, welche geartet sind, in einem durch ein Raster G dargestellten Beobachtungsraum durchquert zu werden, welcher eine erste Auflösungsteilung aufweist, wobei eine Zelle durch Peaks und Seiten oder Segmente dargestellt wird, welche diese Peaks verbinden, **dadurch gekennzeichnet, dass** sie mindestens folgende Elemente umfasst:

  • einen oder mehrere Sensoren (101), welche geeignet sind, um die Koordinaten eines in der Auflösungsteilung des Rasters gemessenen Punktes zu messen, welcher sich in einem Abstand vom Ziel F befindet,
  • ein Modul (103) zur Diskretisierung der gemessenen Koordinaten mit einer räumlichen Auflösungsteilung $\delta$, welche die Auflösungsteilung $R_G$ des Rasters unterschreitet,
  • ein Modul (104) zur Verarbeitung der diskretisierten Daten, welches geeignet ist, die Schritte des Verfahrens nach einem der Ansprüche 1 bis 11 auszuführen.

13. Verfahren nach Anspruch 12, **dadurch gekennzeichnet, dass** der Beobachtungsraum durch einen an Bord eines in Bewegung befindlichen Fahrzeugs (1) mitgeführten Sensor definiert wird und dadurch, dass eine ausgewählte Zelle mit einem Wert der Belegungswahrscheinlichkeit durch ein Hindernis ausgefüllt wird.

**Claims**

1. Computer implemented method for perceiving material bodies, which is intended to detect and determine the location of said bodies on an at least 2-dimensional occupancy grid G, having a first resolution stepsize $R_G$, and comprising a set of cells represented by vertices and segments connecting these vertices, each cell of the occupancy grid G having a probability of occupancy by a material body, the method using a sensor for detecting obstacles which is positioned at a source point S and comprising the following steps:

  a) Acquisition by said sensor of a measurement of the position of a material body detected at a point F;
  b) Definition (401) of the coordinates of the points S and F in a space discretized with the aid of a spatial stepsize $\delta$, the spatial stepsize $\delta$ being smaller than the resolution stepsize $R_G$ of the grid G, the size of the cells being defined by $size\ (c) = r \cdot \delta,\ r \in \mathbb{N}$, a point M with coordinates (l,m) in this discretized space being situated in

  $$x = l \cdot \delta$$
  $$y = m \cdot \delta$$

  the continuous space at the point (x,y), where the points S and F having respectively coordinates $(l_s, m_s)$ and $(l_F, m_F)$;
  c) Determination (402) of the cell $c_s$ of the occupancy grid G containing the point S;
  d) Determination of the coordinates, in the discretized space, of an initial vertex V0 of the cell $c_s$;
  e) Computation (404) of the value of an, integer, error parameter E by using an error function $Err_d(M)$ making it possible to evaluate, in the discretized space, an offset between a point of the space and a straight line connecting the points S and F, said error parameter E being initialized to the value taken by said error function for said initial vertex V0 of the cell $c_s$,
  f) Computation of the value of said error parameter E for at least one first vertex $V1_i$ of the current cell $c_i$ of the grid in the course of observation, corresponding to $Err_d(V1_i)$, this computation consisting in carrying out an addition or subtraction operation between integer numbers, between on the one hand said value of the parameter E, obtained for the initial vertex $V0_i$ of the current cell $c_i$, and corresponding to $Err_d(V0_i)$, and on the other hand an integer increment value ($\Delta$) predefined as a function of the coordinates of the points S and F in the discretized space,
  g) Studying the previously computed value of the error parameter E with respect to a reference value to determine a following cell $c_{i+1}$ traversed by the path [SF];
  h) Computing, if necessary, the value of said error parameter E for an initial vertex $V0_{i+1}$ of the following cell $c_{i+1}$, corresponding to $Err_d(V0_{i+1})$, this computation consisting in carrying out an addition or subtraction operation between integer numbers, between on the one hand said value of the parameter E, obtained for at least one vertex $V_i$ of the current cell $c_i$, and corresponding to $Err_d(V_i)$, and on the other hand an integer increment value ($\Delta$) predefined as a function of the coordinates of the points S and F in the discretized space,
  i) Using (408) this following cell $c_{i+1}$ and said value of the error parameter E, obtained for said initial vertex $V0_{i+1}$

of this cell, as starting point and repeating steps f to h until the cell $c_F$ containing the final point F is reached,

j) Determining (405) the list $\{c_i\}$ of cells considered in the previous steps and situated on the path [SF] or situated at a predefined distance from the path [SF] and updating the value of the probability of occupancy for each of the listed cells in said occupancy grid G.

2.  Computer implemented method according to claim 1, wherein, in the course of step f, a value of said error parameter E, corresponding to $Err_d(V)$, is computed for each "additional" vertex V of the current cell $c_i$, other than the initial vertex, this computation consisting in carrying out an addition or subtraction operation between integer numbers, between on the one hand said value of the parameter E, obtained for the initial vertex $V0_i$ of the current cell $c_i$, and corresponding to $Err_d(V0_i)$, and on the other hand an integer increment value ($\Delta$) predefined as a function of the coordinates of the points S and F in the discretized space, and in which, in the course of step g, the following steps are performed:

    - a search is conducted to investigate whether one of the values of said error parameter E, obtained for the additional vertices, is zero for an identified vertex and, in the affirmative, this vertex is subsequently considered to be the initial vertex of the following cell $c_{i+1}$, the error parameter E corresponding to this new initial vertex being equal to that computed previously for said identified vertex;
    and in the negative,
    - a search is conducted for a side, or a face, of the current cell $c_i$ defined by additional vertices associated with values of the parameter E of opposite signs, said following cell $c_{i+1}$ then being the cell adjacent to the current cell $c_i$ sharing the same side, one of the additional vertices belonging to this common side then being considered to be the initial vertex of the following cell $c_{i+1}$, the error parameter E corresponding to this new initial vertex being equal to that computed previously for this said vertex;
    and in which the list $\{c_i\}$ of the cells defined in step j corresponds to the cells traversed by the straight line segment between the points S and F.

3.  Computer implemented method according to claim 1 or 2, wherein the occupancy grid is defined in 2 dimensions and in which, the error function $Err_d(M)$ is defined by:

$$Err_d(M) = (m - m_s) \cdot (l_F - l_s) - (l - l_s) \cdot (m_F - m_s).$$

and wherein, in the course of step f, a value of the error parameter is computed for each "additional" vertex V of the current cell $c_i$, other than the initial vertex V0, and designated $V_l$, $V_m$ and $V_{lm}$, $Vl_m$ being the vertex opposite to the initial vertex, according to the following operations:

$$Err_d(V_l) \quad = \quad Err_d(V) - \Delta m$$

$$Err_d(V_m) \quad = \quad Err_d(V) + \Delta l$$

$$Err_d(V_{lm}) \quad = \quad Err_d(V_l) + \Delta l$$

where $\Delta l = r \cdot (l_F - l_s)$ and $\Delta m = r \cdot (m_F - m_s)$

4.  Computer implemented method according to claims 2 and 3, in which during step g, by comparing the sign of the computed errors, the next cell traversed is determined in the following manner:

    ◦ If $Err_d(V_{lm})=0$, then the cell ci+1 corresponds to the cell having an initial vertex corresponding to $V_{lm}$ and the error parameter E associated with this new initial vertex is equal to $Err_d(V_{lm})$,
    ◦ If $Err_d(V_{lm})$ and $Err_d(V_1)$ are of opposite signs, then the cell ci+1 corresponds to the cell having an initial vertex corresponding to $V_1$ and the error parameter E associated with this new initial vertex is equal to $Err_d(V_1)$,
    ◦ Otherwise the cell $c_{i+1}$ corresponds to the cell having an initial vertex corresponding to $V_{lm}$ and the error parameter E associated with this new initial vertex is equal to $Err_d(V_m)$.

5.  Computer implemented method according to claim 1 or 2, in which the occupancy grid is defined in 3 dimensions and wherein, the error function $Err_d(M)$ is defined for a point M(l, m, n) in integer coordinates in the following manner:

$$Err_{d\_xy}(M) \quad = \quad (m - m_s) \cdot (l_t - l_s) - (l - l_s) \cdot (m_t - m_s)$$

$$Err_{d\_yz}(M) \quad = \quad (n - n_s) \cdot (m_t - m_s) - (m - m_s) \cdot (n_t - n_s)$$

$$Err_{d\_xz}(M) \quad = \quad (l - l_s) \cdot (n_t - n_s) - (n - n_s) \cdot (l_t - l_s)$$

and wherein, in the course of step f, a value of the error parameter is computed for each "additional" vertex V of the current cell $c_i$, other than the initial vertex V0, and designated $V_l$, $V_m$, $V_n$, $V_{lm}$, $V_{ln}$, $V_{mn}$, $V_{lmn}$, $V_{lmn}$ being the vertex of a three-dimensional cell, opposite to the initial vertex, according to the following operations:

$$Err_{d\_xy}(V_l) \quad = \quad Err_{d\_xy}(V) - \Delta m$$

$$Err_{d\_xy}(V_m) \quad = \quad Err_{d\_xy}(V) + \Delta l$$

$$Err_{d\_xy}(V_{lm}) \quad = \quad Err_{d\_xy}(V_l) + \Delta l$$

$$Err_{d\_yz}(V_m) \quad = \quad Err_{d\_yz}(V) - \Delta n$$

$$Err_{d\_yz}(V_n) \quad = \quad Err_{d\_yz}(V) + \Delta m$$

$$Err_{d\_yz}(V_{mn}) \quad = \quad Err_{d\_yz}(V_m) + \Delta m$$

$$Err_{d\_xz}(V_n) \quad = \quad Err_{d\_xz}(V) - \Delta l$$

$$Err_{d\_xz}(V_l) \quad = \quad Err_{d\_xz}(V) + \Delta n$$

$$Err_{d\_xz}(V_{ln}) \quad = \quad Err_{d\_xz}(V_n) + \Delta n$$

where $\Delta l = r \cdot (l_t - l_s)$, $\Delta m = r \cdot (m_t - m_s)$ and $\Delta n = r \cdot (n_t - n_s)$

6. Computer implemented method according to claim 1, in which, in the course of step j, the listed cells correspond to the cells for which one of their vertices is associated with an error parameter value lying between a predefined minimum error value ($e_{mm}$) and a predefined maximum error value (emax).

7. Computer implemented method according to claim 5, in which the values of minimum and maximum error are dependent, for a given cell, on the distance between the initial vertex of this cell and said vertex S.

8. Computer implemented method according to one of the preceding claims, wherein the coordinates of a point M in the discretized space are represented, on each axis of a frame, by an integer defined by a binary word of W bits, and wherein a point M belongs to a cell of the occupancy grid, each cell being defined, for each axis of the frame by an integer index defined by a binary word of d bits, and in which W is greater than d and in which W and d are chosen such that

$$d < W \leq \frac{T + d - 1}{2}$$

with T corresponding to the maximum number of bits that can be manipulated by an integer arithmetic unit used for the implementation of a multiplication operation to carry out said computation (404) of the value of an error parameter E, in step e.

9. Computer implemented method according to claim 1, in which the coordinates of a point M in the discretized space are represented, on each axis of a frame, by an integer defined by a binary word of W bits, and wherein the integer coordinates ($u_x$, $u_y$, $u_z$) of a point M are determined on the basis of spherical coordinates by computing the offset at the center of the frame K

$$u_x - u_x^K \quad = \quad D \cdot T_x(\alpha, \omega)$$

$$u_y - u_y^K \quad = \quad D \cdot T_y(\alpha, \omega)$$

$$u_z - u_z^K \quad = \quad D \cdot T_z(\omega)$$

with D the distance of the target, $\alpha$ the longitude measured on the basis of the axis x, $\omega$ the latitude measured from the equatorial plane, and $T_x(\alpha, \omega)$, $T_y(\alpha, \omega)$ and $T_z(\omega)$ are precomputed tables of stored integer values (105) defined by:

$$T_x(\alpha, \omega) \quad = \quad \frac{2^{W-1} \cdot \cos(\omega) \cdot \cos(\alpha)}{R}$$

$$T_y(\alpha, \omega) \quad = \quad \frac{2^{W-1} \cdot \cos(\omega) \cdot \sin(\alpha)}{R}$$

$$T_z(\omega) \quad = \quad \frac{2^{W-1} \cdot \sin(\omega)}{R}$$

R designates the maximum range of the sensor,

$$u_x^K \quad = \quad 2^{W-1}$$

$$u_y^K \quad = \quad 2^{W-1}.$$

$$u_z^K \quad = \quad 2^{W-1}$$

10. Computer implemented method according to one of the preceding claims, **characterized in that** for a grid of side 2R, the information of sensors which are outside of the sphere of radius R are filtered before executing the steps of the method.

11. Computer implemented method according to claim 9, **characterized in that** the values of the aforementioned tables are normalized by a value $D_{max} = \sqrt{2} \cdot R$ in 2 dimensions and $D_{max} = \sqrt{3} \cdot R$ $D_{max}$ in 3 dimensions.

**12.** Device for determining the coordinates of cells $c_i$ liable to be traversed in an observation space represented by a grid G having a first resolution stepsize, a cell being represented by vertices and sides or segments connecting these vertices, **characterized in that** it comprises at least the following elements:

• One or more sensors (101) suitable for measuring the coordinates of a point measured in the grid resolution stepsize situated at a distance from the target F,
• A module (103) for discretizing the measured coordinates with a spatial resolution stepsize $\delta$ which is smaller than the grid resolution stepsize $R_G$,
• A module (104) for processing the discretized coordinates suitable for executing the steps of the method according to one of claims 1 to 11.

**13.** Device according to claim 12, **characterized in that** the observation space is defined by a sensor onboard a moving vehicle (1) and **in that** a selected cell is filled by a value of probability of occupancy by an obstacle.

FIG.1

P(o|z)

Mapping 1D

Mapping 2D

# FIG.2

FIG.3A

FIG.3B

FIG.3C

$$0 \leq Err < e_1$$
$$e_1 \leq Err < e_2$$
$$e_2 \leq Err < e_3$$
$$e_3 \leq Err$$

FIG.3D

$$-D(V) \cdot e_{min} \leq Err \leq D(V) \cdot e_{max}$$

FIG.3E

401

Coordonnées de S     Mesure de F

405

Oui

Non     407

408

402     403

404

406

FIG.4

$x_{min}$     $x$     $x_{max}$

$0$     $i$     $2^W-1$

FIG.5

FIG.6

d=1

FIG.7A

d=2

FIG.7B

d=3

FIG.7C

d=4

FIG.7D

d=5

FIG.7E

d=6

FIG.7F

FIG.8

FIG.9

FIG.10A   FIG.10B   FIG.10C

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1558919

- WO 2013189482 A

**Littérature non-brevet citée dans la description**

- **A. W. JOHN AMANATIDES.** A Fast Voxel Traversai Algorithm for Ray Tracing. *Eurographics,* 1987
- **A. HORNUNG ; K. M. WURM ; M. BENNEWITZ ; C. STACHNISS ; W. BURGARD.** OctoMap: an efficient probabilistic 3D mapping framework based on octrees. *Autonomous Robots,* 2013

- **J.E. BRESENHAM.** Algorithm for computer control of a digital plotter. *IBM Systems Journal,* 1965
- **MEL SLATER.** Tracing a ray through uniformly subdivided n-dimensional space. *The Visual Computer,* 01 Janvier 1992